# EUROPEAN PATENT APPLICATION

(11) **EP 4 198 520 A2**
(43) Date of publication of application: **21.06.2023**
(21) Application number: 22214950.2
(22) Date of filing: 20.12.2022
(51) Int. Cl.: G01N 35/10, G01N 35/02, G01N 35/04, G01N 35/00

(54) **SAMPLE ANALYZER AND CLEANING CONTROL METHOD THEREFOR**

(30) Priority: 17.12.2021 CN 202111555533; 17.12.2021 CN 202111555541
(71) Applicant: Shenzhen Mindray Bio-Medical Electronics Co., Ltd., Shenzhen, Guangdong 518057 (CN)
(72) Inventor: ZHOU, Yang, Shenzhen, 518057 (CN); LIU, Youlin, Shenzhen, 518057 (CN)
(74) Representative: KIPA AB

(57) **Abstract**

The invention provides a sample analyzer and a cleaning control method therefor. The sample analyzer includes a dispensing mechanism, a first container, an ultrasonic cleaning mechanism, a first fluid path support mechanism, and a controller. The controller may be configured to: control a moving component to move a pipette needle to a first position, to aspirate a first cleaning fluid from the first container; control the moving component to move and insert the pipette needle into a second cleaning fluid in a first cleaning cell after the first cleaning fluid is aspirated; and control an ultrasonic source assembly to provide a sound field vibration to the second cleaning fluid in the first cleaning cell and the first cleaning fluid.

## Description

### TECHNICAL FIELD

The invention relates to the technical field of automatic analysis device and control method therefor, and in particular to a sample analyzer and a cleaning control method therefor.

### BACKGROUND

In vitro diagnostic (IVD) testing instruments require the use of a probe to dispense a sample and reagent. Further stirring and mixture are required after the sample and reagent are dispensed into a vessel, to ensure a full reaction. The probe is reused and may contact with different fluid media during operation. In order to avoid cross-contamination between different media, all devices including the probe are required to be cleaned after each operation, so as to remove residual substances on surfaces of the devices and avoid the residual substances being brought into a next reaction, which will cause cross-contamination and affect an accuracy of a test result.

Many kinds of media are used during IVD testing, and these media also have different physical characteristics. In a traditional cleaning method, a cleaning unit is designed for each device. When each device completes a media dispensing, it moves to a cleaning position for cleaning, and then performs a next media dispensing after cleaning is completed. With such method, the cleaning medium and cleaning mode are relatively fixed, and such cleaning method may not be able to completely remove pollutants, especially for an occasion with a small cleaning and peeling force. With the long-term usage of the IVD testing instrument, accumulation of minor contamination on its surface may eventually lead to excessive cross contamination, or accumulation of residues may lead to changes in surface properties of a component and increasing fluid residues after cleaning, which may lead to an abnormal test result after the residues enter a reaction system.

At present, regular manual maintenance and clean-up and special chemical cleaning are mainly used to deal with this situation. However, the regular manual maintenance and clean-up is performed manually, an execution time and frequency cannot be accurately controlled, and a complexity of operation is high. Furthermore, it has a high professional requirement on maintenance personnel, and a precision unit may be damaged or invalid when the unit is operated abnormally or improperly.

The special chemical cleaning cleans an operation object in a special way by adding one or more chemical cleaning fluids regularly, and is performed automatically in general. However, such method is only applicable to pollutants which may react with a used cleaning agent, and it is difficult to remove complex pollutants, especially for an occasion with a small cleaning and peeling force. Furthermore, too many settings of cleaning media may increase the complexity of operation and difficulty of consumable management.

### SUMMARY

In view of the above technical problems in the related art, the invention provides a sample analyzer and a cleaning control method therefor. Various types of cleaning fluids are aspirated into a pipette needle according to a cleaning requirement of an inner wall of the pipette needle, and together with a cleaning fluid in a cleaning cell with ultrasonic function, an efficient cleaning of the pipette needle including inner and outer walls can be achieved under the action of an ultrasonic field vibration.

According to a first aspect of the invention, there is provided a sample analyzer, including a dispensing mechanism, a first container, an ultrasonic cleaning mechanism, a first fluid path support mechanism, and a controller. The dispensing mechanism includes a moving component and a pipette needle arranged on the moving component. The moving component is configured to drive the pipette needle to move among different operation positions, to aspirate or discharge a target fluid, and the target fluid includes at least one of a sample or a reagent. The first container is located at a first position in a movement trajectory of the pipette needle and contains a first cleaning fluid. The ultrasonic cleaning mechanism includes a first cleaning cell containing a cleaning fluid and an ultrasonic source assembly configured to provide a sound field vibration to the cleaning fluid in the first cleaning cell. The first fluid path support mechanism is configured to provide at least a second cleaning fluid to the first cleaning cell. The controller is configured to: control the moving component to move the pipette needle to the first position, to aspirate the first cleaning fluid from the first container; control the first fluid path support mechanism to provide the second cleaning fluid to the first cleaning cell; control the moving component to move and insert the pipette needle, after the first cleaning fluid is aspirated, into the second cleaning fluid in the first cleaning cell; and control the ultrasonic source assembly to provide the sound field vibration to the second cleaning fluid in the first cleaning cell and the first cleaning fluid.

According to a second aspect of the invention, there is provided a sample analyzer, including a dispensing mechanism, an ultrasonic cleaning mechanism, a first fluid path support mechanism, a second fluid path support mechanism, and a controller. The dispensing mechanism includes a moving component and a pipette needle arranged on the moving component. The moving component is configured to drive the pipette needle to move among different operation positions, to aspirate or discharge a target fluid, and the target fluid include at least one of a sample or a reagent. The ultrasonic cleaning mechanism includes a first cleaning cell containing a cleaning fluid and an ultrasonic source assembly configured to provide a sound field vibration to the cleaning fluid in the first cleaning cell. The first fluid path support mechanism is configured to provide a first cleaning fluid to the first cleaning cell. The second fluid path support mechanism is configured to inject a second cleaning fluid into an inner cavity of the pipette needle. The controller is configured to: control the first fluid path support mechanism to provide the first cleaning fluid to the first cleaning cell; control the second fluid path support mechanism to inject the second cleaning fluid into the inner cavity of the pipette needle; control the moving component to at least partially insert the pipette needle into the first cleaning fluid in the first cleaning cell; and control the ultrasonic source assembly to provide the sound field vibration to the first cleaning fluid in the first cleaning cell and the second cleaning fluid in the inner cavity of the pipette needle.

According to a third aspect of the invention, there is provided a sample analyzer, including a dispensing mechanism, a cleaning fluid supply mechanism, an ultrasonic cleaning mechanism, a fluid path support mechanism, and a controller. The dispensing mechanism includes a moving component and a pipette needle arranged on the moving component. The moving component is configured to drive the pipette needle to move among different operation positions, to aspirate or discharge a target fluid, and the target fluid includes at least one of a sample or a reagent. The cleaning fluid supply mechanism is configured to provide a first cleaning fluid into an inner cavity of the pipette needle. The ultrasonic cleaning mechanism includes a first cleaning cell containing a second cleaning fluid and an ultrasonic source assembly configured to provide a sound field vibration to the second cleaning fluid in the first cleaning cell. The fluid path support mechanism is configured to provide the second cleaning fluid to the first cleaning cell. The controller is configured to: control the cleaning fluid supply mechanism to provide the first cleaning fluid into the inner cavity of the pipette needle; control the fluid path support mechanism to provide the second cleaning fluid to the first cleaning cell; control the moving component to insert the pipette needle into the second cleaning fluid in the first cleaning cell; and control the ultrasonic source assembly to provide the sound field vibration to the second cleaning fluid in the first cleaning cell and the first cleaning fluid. The first cleaning fluid is different from the second cleaning fluid.

According to a fourth aspect of the invention, there is provided a cleaning control method for a sample analyzer. The cleaning control method includes the following operations. An inner-wall cleaning fluid is provided or injected into an inner cavity of a pipette needle of the sample analyzer. An outer-wall cleaning fluid is provided to a cleaning cell of the sample analyzer, the inner-wall cleaning fluid is different in source from the outer-wall cleaning fluid, or the inner-wall cleaning fluid is different from the outer-wall cleaning fluid. The pipette needle is at least partially inserted into the outer-wall cleaning fluid in the cleaning cell. A sound field vibration is provided to the outer-wall cleaning fluid in the cleaning cell and the inner-wall cleaning fluid in the inner cavity of the pipette needle respectively, to transmit the sound field vibration to outer and inner walls of the pipette needle respectively.

Compared with the related art, embodiments of the invention have the following advantageous effects:
The sample analyzer in the invention is provided with the first container containing the first cleaning fluid. After the pipette needle is controlled by the controller to aspirate the first cleaning fluid in the first container, the pipette needle is inserted into the second cleaning fluid. Such design provides flexibility of cleaning fluids contained in the inner cavity of the pipette needle. Various types of cleaning fluids may be aspirated into the pipette needle according to a cleaning requirement of the inner wall of the pipette needle, and together with the cleaning fluid in the cleaning cell with an ultrasonic function, an efficient cleaning of the pipette needle including inner and outer walls can be achieved under the action of the ultrasonic field vibration.

### BRIEF DESCRIPTION OF THE DRAWINGS

In drawings which are not necessarily drawn to scale, the same reference numeral may represent similar components in different views. The same reference numeral with an alphabetic suffix or different alphabetic suffixes may represent different instances of similar components. The drawings illustrate various embodiments generally by way of example rather than limitation, and are used together with the description and claims to explain the disclosed embodiments. Where appropriate, the same reference numeral is used in all the drawings to refer to the same or similar components. Such embodiments are illustrative and not intended to be exhaustive or exclusive embodiments of the device or method.
FIG. 1 illustrates a block diagram of configuration of a sample analyzer according to an embodiment of the invention.
FIG. 2A illustrates a schematic diagram of a sample analyzer when a pipette needle aspirates a first cleaning fluid from a first container, according to an embodiment of the invention.
FIG. 2B illustrates a schematic diagram of a sample analyzer when a pipette needle with a first cleaning fluid aspirated is moved and inserted into a first cleaning cell, according to an embodiment of the invention.
FIG. 3A illustrates a three-dimensional diagram of an ultrasonic cleaning mechanism as obliquely seen from below, according to an embodiment of the invention.
FIG. 3B illustrates a three-dimensional diagram of an ultrasonic cleaning mechanism as obliquely seen from above, according to an embodiment of the invention.
FIG. 3C illustrates a schematic structural diagram of a first fluid path support mechanism according to an embodiment of the invention.
FIG. 4 illustrates a schematic diagram of a process from a pipette needle aspirating a first cleaning fluid to the pipette needle inserting into a second cleaning fluid in a first cleaning cell, according to an embodiment of the invention.
FIG. 5 illustrates a block diagram of another configuration of a sample analyzer according to an embodiment of the invention.
FIG. 6 illustrates a flowchart of a cleaning control method for a sample analyzer 1' according to an embodiment of the invention.
FIG. 7 illustrates a schematic diagram of a sample analyzer according to another embodiment of the invention.
FIG. 8 illustrates a schematic structural diagram of a first fluid path support mechanism according to another embodiment of the invention.
FIG. 9 illustrates a three-dimensional diagram of a first cleaning cell as obliquely seen from above, according to another embodiment of the invention.
FIG. 10 illustrates a three-dimensional diagram of an ultrasonic cleaning mechanism as obliquely seen from below, according to another embodiment of the invention.
FIG. 11 illustrates a flowchart of a cleaning control method for a sample analyzer according to an embodiment of the invention.

### Members denoted by reference numerals in the drawings:

1 - Sample analyzer, 2 - Reaction disk, 3 - Reaction vessel, 4 - Moving component, 5 - Pipette needle, 6 - First container, 7 - Ultrasonic cleaning mechanism, 8 - First cleaning cell, 9 - Ultrasonic source assembly, 10 - First fluid path support mechanism, 11 - Controller, 12 - Fluid discharge mechanism, 13 - Overflow cavity fluid discharge port, 14 - Overflow cavity, 15 - Fluid inlet port, 16 - Cleaning cavity fluid discharge port, 17a, 17b, 17c - Adjustment component, 10a - First fluid path assembly, 10b - Second fluid path assembly, 12a - Discharge fluid path assembly, 15a - First fluid inlet port, 15b - Second fluid inlet port, 15c - Fluid inlet port.

### DETAILED DESCRIPTION

In order to enable those skilled in the art to better understand technical solutions of the invention, the embodiments of the invention is described in detail below in combination with the drawings and specific implementations. The detailed description is not intended to limit the invention.

Terms "first", "second" and the like used in the invention do not represent any order, quantity or importance, but rather are designations used to distinguish components. A so-called "first element" may be the same as or different from the "second element". Terms such as "including", "comprising", or the like are intended to indicate that an element before the word covers elements listed after the word, and does not exclude possibility where other elements may also be covered. Terms "upper", "lower", "left", "right", or the like are only intended to represent a relative position relationship. When an absolute position of a described object changes, the relative position relationship may also change accordingly.

In the invention, when a specific device is described to be located between a first device and a second device, there may be or may not be an intermediate device between the specific device and the first device or between the specific device and the second device. When a specific device is described to be connected to other devices, the specific device may be directly connected to the other devices without an intermediate device, or an intermediate device may be present and the specific device is connected to the other devices indirectly.

All the terms (including technical terms or scientific terms) used in the invention have the same meanings as those understood by those of ordinary skill in the art to which the invention belongs, unless otherwise defined specifically. It should also be understood that terms defined in for example a general dictionary, should be construed as having meanings consistent with their meanings in the context of relevant technologies, and should not be construed as idealized or highly formalized meanings, unless explicitly defined herein. Technologies, methods and devices known to those of ordinary skill in the related art may not be discussed in detail, however, the technologies, methods and devices should be considered as a part of the description, where appropriate.

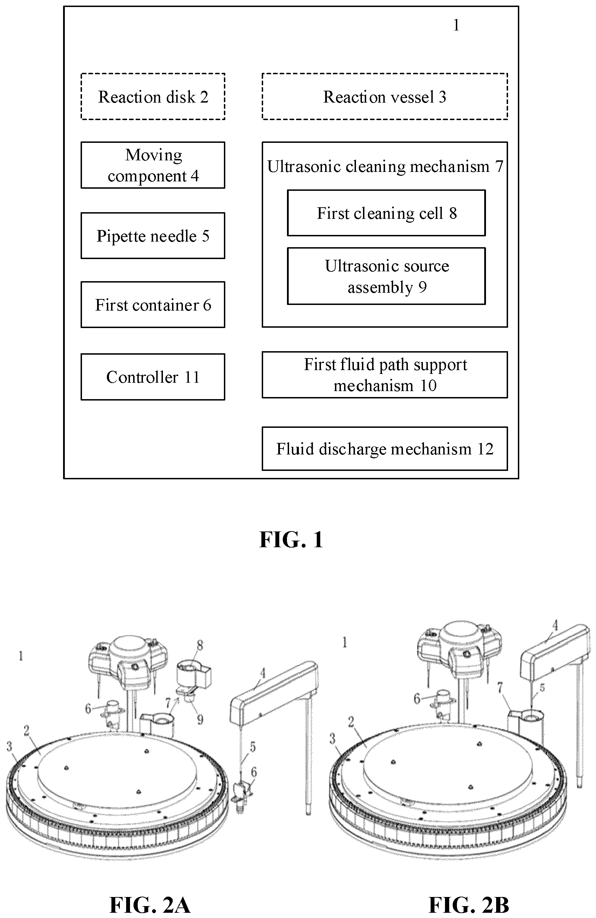

FIG. 1 illustrates a block diagram of configuration of a sample analyzer according to a first embodiment of the invention. In the first embodiment, the sample analyzer 1 may include: a dispensing mechanism (including a moving component 4 and a pipette needle 5), a first container 6, an ultrasonic cleaning mechanism 7, a first fluid path support mechanism 10, and a controller 11. As shown in FIGS. 1, 2A and 2B, the pipette needle 5 is arranged on the moving component 4, so that the moving component 4 drives the pipette needle 5 to move among different operation positions, to aspirate or discharge a target fluid including at least one of a sample or a reagent. A route along which the moving component 4 drives the pipette needle 5 to move among different operation positions may also called a movement trajectory of the pipette needle 5. The sample in the embodiment may be serum or whole blood, or a user's body fluid, such as urine.

The sample analyzer 1 may further include a reaction disk 2 and a reaction vessel 3 distributed on the reaction disk 2. Quantity, size, or the like of the distributed reaction vessel may be adjusted based on actual requirements, which is not limited specifically in the invention. With the drive of the moving component 4, the pipette needle 5 may aspirate the sample or reagent and inject the sample or reagent to each reaction vessel 3 on the reaction disk 2 respectively, so that the sample and reagent may react therein to perform in vitro testing. It should be noted that the reaction disk 2 and the reaction vessel 3 are marked with dotted lines in FIG. 1, which is intended to represent that the cleaning control method for the sample analyzer according to various embodiments of the invention may be implemented independently of the two members. It may be understood that the pipette needle 5 includes a sample needle for aspirating the sample at a sample aspirating position and injecting the sample into the reaction vessel 3, and a reagent needle for aspirating the reagent at a reagent aspirating position in a reagent disk and injecting the reagent into the reaction vessel 3. The sample analyzer 1 may further include a mixing mechanism configured to mix the reagent and sample in the reaction vessel to obtain a reaction fluid, an incubation mechanism configured to incubate the reaction fluid, and a detection mechanism. The detection mechanism may be an optical detection component configured to perform an optical detection on the incubated reaction fluid to obtain reaction data of the sample. For example, the optical detection component may detect an absorbance of a to-be-tested reaction fluid, and calculate a concentration of a to-be-tested composition in the sample through a calibration curve.

As shown in FIGS. 2A and 2B, the first container 6 is located at a first position in a movement trajectory of the pipette needle 5 and contains a first cleaning fluid, so that the pipette needle 5 aspirates the first cleaning fluid into an inner cavity thereof. The first container 6 may be a container other than a first cleaning cell 8 forming an ultrasonic cleaning mechanism 7 together with an ultrasonic source assembly 9, such as a stirring rod cleaning cell, in which a cleaning fluid for cleaning the stirring rod may be used as the first cleaning fluid. The first container 6 may also be a container placed at a cleaning fluid holding position arranged separately. However, the first container 6 is not limited thereto, and in some embodiments, the first container 6 may also be the first cleaning cell 8, or may be any flexibly selectable container in the movement trajectory of the pipette needle 5.

The ultrasonic cleaning mechanism 7 includes a first cleaning cell 8 containing a cleaning fluid and an ultrasonic source assembly 9 configured to provide a sound field vibration to the cleaning fluid in the first cleaning cell 8. The first fluid path support mechanism 10 (not shown in FIGS. 2A and 2B) may be configured to provide at least a second cleaning fluid to the first cleaning cell 8. The second cleaning fluid is used to clean at least a part of an outer wall of the pipette needle 5 immersed therein under the sound field vibration. The part of the pipette needle 5 immersed into the second cleaning fluid includes at least a free end of the pipette needle 5. In order to aspirate a target fluid, at least the free end of the pipette needle 5 is inserted into the target fluid, to aspirate the target fluid through an opening of the free end of the pipette needle 5. Specifically, the first fluid path support mechanism 10 may be a container of any shape and size, or may be a pipeline device configured by a container in combination with other components. The first fluid path support mechanism 10 in the invention may be of any structure (for example, a control unit, a fluid source, a fluid supply port, a flow controlling valve, or the like, may be introduced thereto), as long as the first fluid path support mechanism 10 can provide at least the second cleaning fluid to the first cleaning cell 8.

In various embodiments of the invention, the controller 11 may be implemented by a dedicated processor, such as but not limited to a Central Processing Unit (CPU), a Microprocessor Unit (MPU), or the like, or by a hardware circuit with a processing function, such as a Field Programmable Gate Array (FPGA), an Application Specific Integrated Circuit (ASIC), a System on Chip (SOC), or the like.

The controller 11 (not shown in FIGS. 2A and 2B) may be configured to control at least the moving component 4, the pipette needle 5 and the ultrasonic source assembly 9 to perform a cleaning process of the sample analyzer 1.

As shown in FIG. 2A, the controller 11 may control the moving component 4 to move the pipette needle 5 to the first position, to aspirate the first cleaning fluid from the first container 6 at the first position. As shown in FIG. 2B, the controller 11 may control the first fluid path support mechanism 10 to provide the second cleaning fluid to the first cleaning cell 8, control the moving component 4 to move the pipette needle 5 after the first cleaning fluid is aspirated and insert the pipette needle 5 into the second cleaning fluid in the first cleaning cell 8, and control the ultrasonic source assembly 9 to provide the sound field vibration to the first cleaning fluid (in the inner cavity of the pipette needle 5) and the second cleaning fluid in the first cleaning cell 8. In this way, when the inner cavity of the pipette needle 5 contains the first cleaning fluid and the outer wall of the pipette needle 5 is immersed into the second cleaning fluid, the sound field vibration is transmitted to the outer wall of the pipette needle 5 through the second cleaning fluid, and then transmitted to the first cleaning fluid in the inner cavity through the pipette needle 5, to achieve targeted and effective cleaning of the inner and outer walls. In particular, the type and/or concentration of the first cleaning fluid may be flexibly selected according to cleaning requirements of the inner wall of the pipette needle 5. For example, an adaptive first cleaning fluid may be contained in each first container 6 in the movement trajectory according to the cleaning requirements of the inner wall of the pipette needle 5. For another example, multiple first containers 6 may be arranged in the movement trajectory, and different first containers 6 may contain a same or different first cleaning fluids. For example, a first one of the first containers 6 may contain an acidic solution, and a second one of the first containers 6 may contain an alkaline solution. The pipette needle 5 may be moved to the first container 6 containing the first cleaning fluid adaptive to the cleaning requirements of the inner wall of the pipette needle 5, and aspirate the first cleaning fluid from the first container 6.

In some embodiments, the first cleaning fluid may be the same as or different from the second cleaning fluid. The first cleaning fluid is different from the second cleaning fluid in that the first cleaning fluid has a composition or source different from that of the second cleaning fluid. For example, different composition may be different substance types, or the same substance type but different mixture modalities of cleaning fluids (suspension, emulsion, solution, or the like), or the same substance type and mixture modality but different proportions of substances. For another example, different sources of cleaning fluids mean that the cleaning fluids come from different fluid supply pipes, different fluid supply containers, fluid supply sources at different positions, fluid supply sources at different moments (especially fluid supply will change over time), or the like.

It should be noted that the so-called different composition of the cleaning fluids in the invention may refer to different types, or the same type but different concentrations, or the like. Specifically, the first and second cleaning fluids may be selected cooperatively by considering a property of a pollutant on the inner wall of the pipette needle 5 in combination with a difference between the property of the pollutant on the inner wall of the pipette needle 5 and a property of a polluted area on the outer wall. For example, the first cleaning fluid may have the same type as the second cleaning fluid, but may have a concentration higher than that of the second cleaning fluid, to efficiently erosive decompose and strip the pollutants that are more likely to be accumulated on the inner wall, and thus achieving the effect of differential cleaning. For another example, the first cleaning fluid may be selected to have a type and concentration different from that of the second cleaning fluid based on a difference between the property of the pollutant in the inner cavity (including a wall surface and a holding space) of the pipette needle 5 and a property of a pollutant on the outer wall. For example, the first cleaning fluid may be a chemically erosive fluid to fully erode and decompose the pollutant (including a potential pollutant) on the inner wall, and the second cleaning fluid may be an alkaline solution, such as sodium hydroxide solution, strong potassium oxide solution, a surfactant with a cleaning performance, or a mixture thereof, to activate, separate and clean the pollutant usually generated on the outer wall.

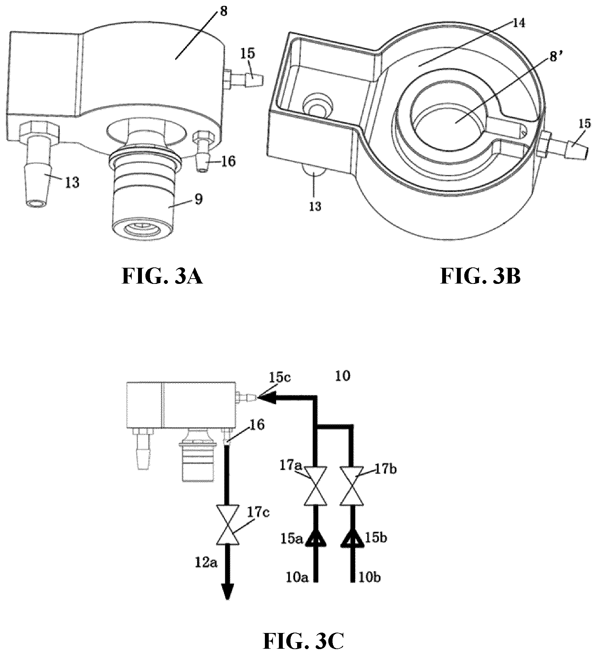

In some embodiments, as shown in FIGS. 3A and 3B, the ultrasonic cleaning mechanism 7 may include a first cleaning cell 8 and an ultrasonic source assembly 9 located at the bottom of the first cleaning cell 8 (for example, but not limited to, connected to the first cleaning cell 8). The ultrasonic source assembly 9 is located at the bottom of the first cleaning cell 8 to transmit the sound field vibration to the cleaning fluid in the first cleaning cell 8 through the bottom of the first cleaning cell 8. During cleaning, a wall of a cleaning cavity 8' of the first cleaning cell 8 will vibrate, and dirty substances cleaned off will not adhere to the wall of the cleaning cavity 8', thus keeping cleaning of the cleaning cavity 8'. It may be understood that the dirty substances are more likely to attach to the bottom of the cleaning cavity 8' due to gravity. The ultrasonic source assembly 9 is arranged at the bottom of the first cleaning cell 8 in the embodiment, a bottom wall of the cleaning cavity 8' vibrates greatly, which may effectively prevent the dirty substances from attaching to the bottom wall of the cleaning cavity 8'. Furthermore, the ultrasonic source assembly 9 is arranged at the bottom of the first cleaning cell 8, a center of gravity of the ultrasonic source assembly 9 may be in the same line as a central axis of the first cleaning cell 8 by way of a bottom vibration source, and the center of gravity will not shift over a long period of time when the ultrasonic source assembly 9 is used.

Further, the first cleaning cell 8 is provided with a cleaning cavity 8' and an overflow cavity 14. The pipette needle 5 is inserted into a cleaning fluid in the cleaning cavity 8', and the overflow cavity 14 receives the cleaning fluid overflown from the cleaning cavity 8'. For example, during cleaning by ultrasonic vibration, the cleaning fluid in the cleaning cavity 8' may overflow under the vibration, thus polluting the device. The overflow cavity 14 is provided so that the cleaning fluid in the cleaning cavity 8' is overflowed to the overflow cavity 14, and an amount of the cleaning fluid in the cleaning cavity 8' is always constant, which may stabilize a cleaning frequency to ensure cleaning effect of the pipette needle 5.

The controller 11 is further configured to, during controlling the first fluid path support mechanism 10 to provide the second cleaning fluid to the first cleaning cell 8, control the first fluid path support mechanism 10 to provide the second cleaning fluid to the cleaning cavity 8' within a first preset duration, to enable the second cleaning fluid in the cleaning cavity 8' to overflow to the overflow cavity 14, such that the cleaning cavity 8' is filled with the second cleaning fluid, to improve cleaning effect.

In some embodiments, the sample analyzer 1 may further include a fluid discharge mechanism 12 (as shown in FIG. 1) configured to discharge the used cleaning fluid from the first cleaning cell 8. As shown in FIGS. 3A and 3B, the ultrasonic cleaning mechanism 7 may be provided with an overflow cavity fluid discharge port 13, an overflow cavity 14, a fluid inlet port 15, and a cleaning cavity fluid discharge port 16. The fluid inlet port 15 may be configured to connect the first cleaning cell 8 with a fluid supply pipe to provide a cleaning fluid (such as the second cleaning fluid, cleaning water, or the like) to the first cleaning cell 8 as required. The overflow cavity 14 is also provided, so that once the cleaning fluid entering the first cleaning cell 8 exceeds a capacity of the first cleaning cell 8 and thus overflows, the overflown cleaning fluid enters the overflow cavity 14. The overflow cavity fluid discharge port 13 at the bottom is configured to discharge the overflown cleaning fluid. The overflow cavity fluid discharge port 13 discharges the fluid under the action of gravity. The overflow cavity fluid discharge port 13, the overflow cavity 14 and the cleaning cavity fluid discharge port 16 work together as the fluid discharge mechanism 12. The fluid discharge mechanism 12 is specifically described above by using the ultrasonic cleaning mechanism 7 shown in FIGS. 3A and 3B, however, a structure of the fluid discharge mechanism 12 is not limited to thereto. For example, in some cases, when the controller 11 controls a volume of the cleaning fluid entering the first cleaning cell 8, no excessive cleaning fluid will be overflown. Therefore, the overflow cavity 14 and the overflow cavity fluid discharge port 13 may not be provided, and the cleaning cavity fluid discharge port 16 may be connected to a vacuum pump and may discharge the fluid under the action of the vacuum pump.

In some embodiments, the first fluid path support mechanism 10 is further configured to provide a third cleaning fluid to the first cleaning cell 8. The third cleaning fluid may be the same as or different from the second cleaning fluid. For example, after cleaning is completed once, the first fluid path support mechanism 10 may continue to provide the third cleaning fluid which is the same as (to update) or different from (to replace) the second cleaning fluid to the first cleaning cell 8, to continue to clean the pipette needle 5. The third cleaning fluid may be updated or replaced based on a change of a pollutant on the needle wall during cleaning of the pipette needle 5.

Further, the sample analyzer 1 further includes a second container located at a second position in the movement trajectory of the pipette needle 5 and containing a fourth cleaning fluid. The fourth cleaning fluid may be the same as or different from the first cleaning fluid. If only the first container is arranged in the movement trajectory, when cleaning is continued after the cleaning of the pipette needle 5 is completed, the first cleaning fluid in the first container is required to be discharged before adding the fourth cleaning fluid to the first container to continue cleaning, reducing a cleaning efficiency. When the second position and the second container are arranged in the movement trajectory, the pipette needle can aspirate the fourth cleaning fluid efficiently and quickly, and the cleaning efficiency is improved.

The cleaning process controlled by the controller 11 will be described as an example below.

In some embodiments, the controller 11 is further configured to, after the ultrasonic source assembly 9 provides the sound field vibration to the second cleaning fluid in the first cleaning cell 8 for a second preset duration and/or a second preset number of times, close the ultrasonic source assembly 9 and control the fluid discharge mechanism 12 to discharge the second cleaning fluid in the first cleaning cell 8, and control the pipette needle 5 to discharge the first cleaning fluid. For example, before leaving a factory, durations and/or number of times of the sound field vibration may be preset for various types of pipette needles 5 according to pollution conditions under different usage cases, which are presented to a user by way of cleaning modes (such as visual presentation on a display interface, or auditory prompt), so that the user may select a cleaning mode as required. Specifically, the second preset duration may be set as 3min when the pollutants on the inner wall of the pipette needle 5 are easy to be cleaned, and the second preset duration may be set as 6min when the pollutants on the inner wall of the pipette needle 5 is difficult to be cleaned. For another example, the user may customize the second preset duration and/or the second preset number of times according to a current cleaning requirement of the pipette needle 5 (a customized mode), so that the sound field vibration for the second preset duration and/or the second preset number of times may complete efficient cleaning of the pipette needle 5. The controller 11 may automatically execute various cleaning modes. When the sound field vibration has been performed for the preset duration and/or the preset number of times, the vibration is turned off and the fluid discharge mechanism 12 is controlled to discharge the used cleaning fluid, to complete cleaning. Therefore, proper cleaning of the pipette needle 5 may be ensured to avoid wear and tear on the pipette needle 5 due to inadequate cleaning or excessive cleaning.

In some embodiments, the controller 11 may be further configured to, after closing the ultrasonic source assembly 9 and controlling the fluid discharge mechanism 12 to discharge the second cleaning fluid in the first cleaning cell 8, update (with a fresh second cleaning fluid) or replace (by a different cleaning fluid as required) the second cleaning fluid through the following operations. Specifically, the controller 11 may control the pipette needle 5 to discharge the first cleaning fluid, and control the moving component 4 to move the pipette needle 5 to the second position after the fluid is discharged, to aspirate a fourth cleaning fluid from the second container. The fourth cleaning fluid may be the same as (to update) or different from (to replace) the first cleaning fluid. The controller 11 may control the first fluid path support mechanism 10 to provide a third cleaning fluid to the first cleaning cell 8. The third cleaning fluid may be the same as (to update) or different from (to replace) the second cleaning fluid, and the third cleaning fluid is used to clean the outer wall of the pipette needle 5. The controller 11 may be further configured to control the moving component 4 to move and insert, at least partially, the pipette needle 5 into the third cleaning fluid in the first cleaning cell 8 after the fourth cleaning fluid is aspirated. Then, the controller 11 may control the ultrasonic source assembly 9 to provide the sound field vibration to the third cleaning fluid in the first cleaning cell 8, and control the pipette needle to at least partially insert into the third cleaning fluid, so that the sound field vibration is simultaneously provided to the fourth cleaning fluid in the inner cavity of the pipette needle 5. The controller 11 closes the ultrasonic source assembly 9 and controls the fluid discharge mechanism 12 to discharge the third cleaning fluid in the first cleaning cell 8, and controls the pipette needle 5 to discharge the fourth cleaning fluid, after providing the sound field vibration to the third cleaning fluid for the second preset duration and/or the second preset number of times.

For example, the third cleaning fluid may be of the same type as the second cleaning fluid, but has a concentration lower than that of the second cleaning fluid, or even may be cleaning water. The residue of the pipette needle 5 is stable in property, and is difficult to be cleaned. The second cleaning fluid may be selected as a cleaning fluid with a stronger performance and higher concentration, such as a strong alkaline solution. After a first cleaning is completed, it is very likely that most of the residue of the pipette needle 5 has been removed, and only pollutants with relatively low cleaning difficulty are left. At this time, the cleaning fluid may be replaced by a cleaning fluid with a lower concentration or intensity, which may save the cleaning fluid and cleaning water for subsequent washing. For example, the second cleaning fluid is 6M potassium hydroxide, and the third cleaning fluid is 2M potassium hydroxide, which may achieve efficient removal of the residue of the pipette needle 5.

In some embodiments, the sample analyzer may further include a second cleaning cell, a second fluid path support mechanism, and a third fluid path support mechanism (not shown). The second fluid path support mechanism is configured to provide cleaning water to the second cleaning cell, and the third fluid path support mechanism is configured to provide cleaning water to an inner cavity of the pipette needle 5. The cleaning water is provided to the second cleaning cell and the inner cavity of the pipette needle respectively by providing the second fluid path support mechanism and the third fluid path support mechanism, which is beneficial to rinsing the second cleaning cell and the pipette needle 5 by the cleaning water in a later stage of the cleaning process, thereby ensuring a cleaning effect and improving a cleaning efficiency.

The controller 11 is further configured to, during controlling the pipette needle 5 to discharge the first cleaning fluid, control the pipette needle 5 to be moved to the second cleaning cell to discharge the first cleaning fluid, and control the second fluid path support mechanism to provide the cleaning water to the second cleaning cell, to clean an outer wall of the pipette needle 5 by the cleaning water. The controller 11 may control the third fluid path support mechanism to provide the cleaning water to the inner cavity of the pipette needle 5, to wash an inner wall of the pipette needle 5. The cleaning fluid on the inner and outer walls of the pipette needle 5 after cleaning may be rinsed, thus ensuring that the inner and outer walls of the pipette needle 5 are free of the pollutant and cleaning fluid, and ensuring safety of an application of the pipette needle 5.

In some embodiments, the first fluid path support mechanism 10 may further be configured to provide cleaning water to the first cleaning cell 8. The controller 11 may control the first fluid path support mechanism 10 to provide the cleaning water to the first cleaning cell 8 after controlling the fluid discharge mechanism 12 to discharge the second or third cleaning fluid in the first cleaning cell 8, and may control the fluid discharge mechanism 12 to discharge the cleaning water in the first cleaning cell 8 after providing the cleaning water for a third preset duration.

The above cleaning by the cleaning water is performed at least at a final stage of the cleaning process to avoid a residue of the cleaning fluid. When a residual pollutant of the pipette needle 5 can be cleaned easily, for example, when the residual pollutant may be removed with only the cleaning water used as the cleaning fluid, the controller 11 may control the first fluid path support mechanism 10 to provide the cleaning water to the first cleaning cell 8, to clean the residual pollutant. After cleaning the pipette needle 5 by other cleaning fluids several times, the cleaning water may also be used for washing the pipette needle 5 finally. No matter other cleaning fluids or the cleaning water in the first cleaning cell 8, the used cleaning fluid or cleaning water after ultrasonic cleaning are required to be discharged through the fluid discharge mechanism 12 under the control of the controller 11, to facilitate a next usage of the first cleaning cell 8.

In some embodiments, the first cleaning fluid contained in the inner cavity of the pipette needle 5 may also be updated (by a fresh first cleaning fluid) or replaced (by a different cleaning fluid) as required. Specifically, the controller 11 may be further configured to, after closing the ultrasonic source assembly 9 and controlling the fluid discharge mechanism 12 to discharge the used second cleaning fluid in the first cleaning cell 8 and before controlling the ultrasonic source assembly 9 to provide the sound field vibration to the third cleaning fluid in the first cleaning cell 8, control the moving component 4 to move the pipette needle 5 to another position, and enable the first cleaning fluid to be sprayed from the pipette needle 5 to clean the pipette needle 5, so that the pipette needle 5 is ready to aspirate the cleaning fluid again. The controller 11 may control the moving component 4 to move the cleaned pipette needle 5 to the first position, to aspirate the first cleaning fluid (for updating) from the first container 6, or to move the cleaned pipette needle 5 to the second position other than the first position, to aspirate the fourth cleaning fluid (for replacement) different from the first and second cleaning fluids. Then, the controller 11 may control the moving component 4 to move and insert the pipette needle 5, after the first or fourth cleaning fluid is aspirated again, into the third cleaning fluid in the first cleaning cell 8 for further cleaning thereof.

The residual pollutant on the inner wall of the pipette needle 5, which is difficult to be cleaned, may require to be cleaned several times. After each cleaning, the residue on the inner wall of the pipette needle 5 may change. When the residual pollutant on the inner wall of the pipette needle 5 changes greatly between two cleanings, the type or concentration of the cleaning fluid in the inner cavity of the pipette needle 5 may be selected to be updated/replaced. For example, the first cleaning fluid in the inner cavity of the pipette needle 5 may be a surfactant during the ultrasonic cleaning. In order to further clean a residue after the cleaning is completed, the first cleaning fluid in the inner cavity of the pipette needle 5 is replaced by the fourth cleaning fluid, i.e., sodium hydroxide. The fourth cleaning fluid is provided at the second position. Different cleaning fluids may be selected for the inner cavity, which may be adaptive to efficient cleaning of residues with different properties.

Further, at each stage of the cleaning process, the controller 11 may monitor a fluid level in the first cleaning cell 8, to exclude obstacles from the cleaning process.

In some embodiments, the sample analyzer 1 may further include a fluid level detection component configured to detect a level of a fluid in the first cleaning cell 8. The fluid level detection component may be implemented in various ways, such as but not limited to a fluid level sensor, the pipette needle 5 itself temporarily left in the first cleaning cell 8, or the like. The controller 11 may obtain the fluid level detected by the fluid level detection component, and control the first fluid path support mechanism 10 to provide a corresponding cleaning fluid (such as but not limited to the second cleaning fluid, the third cleaning fluid, or the cleaning water) to the first cleaning cell 8, when the fluid level is less than a first preset fluid level. In this way, a process of supplying a cleaning fluid to the first cleaning cell 8 to an appropriate fluid level may be performed automatically, to ensure that the first cleaning cell 8 contains the cleaning fluid with the appropriate fluid level, so as to ensure correctly performing the cleaning process of the pipette needle 5.

In some embodiments, the controller 11 may be further configured to, after the fluid path support mechanism 10 provides the cleaning fluid (such as the second cleaning fluid, the third cleaning fluid, or the cleaning water) to the first cleaning cell 8, obtain the fluid level detected by the fluid level detection component, and control the ultrasonic source assembly 9 to provide the sound field vibration, or enable the ultrasonic source assembly 9 to be in a state capable of activating the sound field vibration, when an absolute value of a difference between the fluid level and a second preset fluid level is less than a preset difference. The second preset fluid level may ensure that an amount of the cleaning fluid in the first cleaning cell 8 reaches a resonance point for the ultrasonic cleaning and submerges a height of the pipette needle 5 involved in aspirating and discharging the sample. Reaching the second preset fluid level means that a fluid injection is completed, the pipette needle 5 may drop to a specified height, and the sound field vibration is activated to start the ultrasonic cleaning. In this way, damage to the ultrasonic source assembly 9 due to activating the sound field vibration when the fluid level is too low may be avoided, a vibration effect of the ultrasonic wave may be improved as much as possible, and a polluted part of the pipette needle 5 may be ensured to be fully cleaned.

The fluid level may also be monitored at other stages of the entire cleaning process in the first cleaning cell 8, and an appropriate operation may be performed.

For example, an emptying detection of the first cleaning cell 8 may be carried out in advance before supplying the cleaning fluid to the first cleaning cell 8. When the fluid level detected at this time exceeds a third preset fluid level, it means that the used cleaning fluid has not been emptied from the first cleaning cell 8, and the controller 11 may control an alert means to output fault prompt information. During implementation, the cleaning effect may be reduced when the used cleaning fluid in the first cleaning cell 8 is not fully discharged. When the cleaning fluid in the first cleaning cell 8 is continued to be replaced, it may react with the cleaning fluid for replacement, which may adversely affect the cleaning effect. In this case, the fluid level in the first cleaning cell 8 is automatically monitored and the fault prompt information is output to remind the user or automatically interrupt the cleaning process, which may avoid an improper cleaning process and facilitate fault detection, troubleshooting and repair by staff. Furthermore, a next cleaning operation may be carried out when the fluid level detected by the fluid level detection component meets requirements.

In some embodiments, the controller 11 may be further configured to control the moving component 4 to drive the pipette needle 5 to drop to a preset height, and then activate the ultrasonic source assembly 9 to provide the sound field vibration to clean the polluted part of the pipette needle 5 fully. The preset height may represent a height at which the pipette needle 5 is submerged when it aspirates and discharges the sample, and may ensure resonance of internal and external cleaning fluids of the pipette needle 5, so as to obtain a best cleaning effect. For example, a cleaning effect of the pollutant may become worse when a submerged height of the pipette needle 5 is lower than the polluted area of the pipette needle 5; the resonance of internal and external cleaning fluids of the pipette needle 5 is poor when the submerged height of the pipette needle 5 is over the polluted area, but does not reach the preset height, and thus the best cleaning effect cannot be obtained. The preset height may be adjusted accordingly due to a difference in specification of the pipette needle 5, an application condition of in vitro detection, a type and concentration of the cleaning fluid, or the like.

During dropping of the pipette needle 5, the controller 11 may obtain a fluid level detection result from the fluid level detection component. When the detected fluid level reaches the second preset fluid level, or when an absolute value of a difference between the detected fluid level and the second preset fluid level is less than a preset difference, the cleaning fluid is supplied normally during the dropping, and no failure (such as a wrong fluid discharge operation) occurs to induce a too low fluid level. Then, the pipette needle 5 may be dropped. Otherwise, dropping of the pipette needle 5 and subsequent cleaning operations are interrupted. In this way, fluid supply/discharge failure during dropping of the pipette needle 5 may be avoided to ensure a correct implementation of the subsequent cleaning operations.

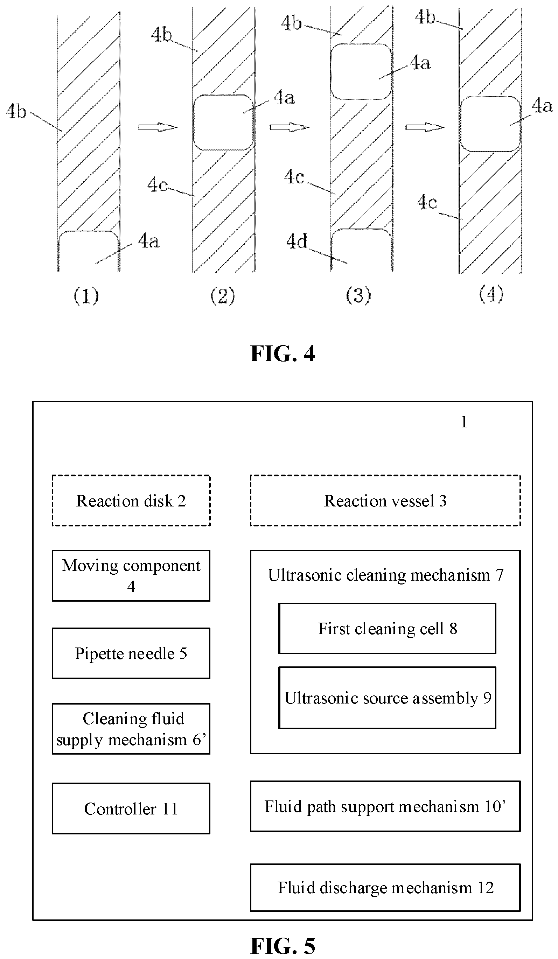

FIG. 4 illustrates a schematic diagram of a process from a pipette needle 5 aspirating a first cleaning fluid to the pipette needle 5 inserting into a second cleaning fluid in a first cleaning cell 8, according to an embodiment of the invention.

Firstly, in operation (1), the controller 11 may control the pipette needle 5 to aspirate air to form a first air section 4a before the pipette needle 5 aspirates the first cleaning fluid 4c or the fourth cleaning fluid 4c. For example, rather than limitation, the first air section 4a has a volume of 1µl to 5µl. Cleaning water 4b may be retained in a front end of the inner cavity of the pipette needle 5 (an upper section in FIG. 4) before the air in the first air section 4a is aspirated. In a subsequent process, especially under the sound field vibration after activating the ultrasonic source assembly 9, the aspirated cleaning fluid 4c tends to diffuse into a side (an upper side in FIG. 4) of the first air section 4a, opposite to the aspirated cleaning fluid 4c, in the inner cavity of the pipette needle 5. The air in the first air section 4a with an appropriate size is aspirated and used as a buffer layer between the cleaning water 4b and the cleaning fluid 4c, referring to operation (2). Therefore, in a subsequent process, a proportion of the aspirated cleaning fluid 4c diffusing into the opposite side is lower than a threshold, to prevent the aspirated cleaning fluid from being diluted excessively, so as to ensure that enough cleaning fluid 4c is left in a polluted section of the pipette needle 5 to achieve efficient cleaning.

The pipette needle 5 is controlled to aspirate air to form a second air section 4d after the pipette needle 5 aspirates the first cleaning fluid 4c or the fourth cleaning fluid 4c, as shown in operation (3). The pipette needle 5 may be moved to the first cleaning cell 8 when the second air section 4d is retained at a rear end of the pipette needle 5, so that the second air section 4d may block the cleaning fluid 4c, and throwing out of the cleaning fluid 4c under the action of gravity or moving power may be reduced or avoided. After the moving component 4 is controlled to move the pipette needle 5 to the first cleaning cell 8, the aspirated air in the second air section 4d is discharged, and the moving component 4 is controlled to at least partially insert the pipette needle 5 into the cleaning fluid (such as but not limited to the second cleaning fluid or the third cleaning fluid) in the first cleaning cell 8. Therefore, the second air section 4d does not participate in subsequent sound field vibration, to avoid an air bubble affecting a cleaning effect (for example, resulting in spillage, sputtering, or the like).

FIG. 3C illustrates a schematic structural diagram of a first fluid path support mechanism 10 according to an embodiment of the invention. As shown in FIG. 3C, the first fluid path support mechanism 10 may include a first fluid path assembly 10a for supplying a cleaning agent and a second fluid path assembly 10b for supplying cleaning water. The second cleaning fluid to be introduced into the first cleaning cell 8 may be formed by mixing the cleaning agent with the cleaning water. The cleaning agent and cleaning water may be supplied respectively by providing two separate fluid path assemblies, so that a concentration of the second cleaning fluid may be controlled (or adjusted) conveniently and accurately through adjustment components 17a and 17b according to cleaning requirements. In this way, the first fluid path support mechanism 10 with the same configuration may meet cleaning scenarios with different concentration requirements, and it is only necessary to adjust the adjustment components 17a and 17b when the required concentration of the second cleaning fluid changes due to change of the cleaning requirements.

As shown in FIG. 3C, the first fluid path assembly 10a may be provided with a first fluid outlet port 15a, the second fluid path assembly 10b may be provided with a second fluid outlet port 15b, and the first cleaning cell 8 may be provided with a single fluid inlet port 15c. The first fluid outlet port 15a and the second fluid outlet port 15b are both communicated with the single fluid inlet port 15c through the adjustment components 17a and 17b respectively. The adjustment components 17a and 17b are controlled by the controller 11 to adjust fluid volumes outputted from the first fluid outlet port 15a and the second fluid outlet port 15b respectively as required, so that the concentration of the second cleaning fluid is controlled (or adjusted) conveniently and accurately. Such a port connection method may be compatible with a common single fluid inlet port configuration of the first cleaning cell 8, and improve an applicable scope of the first fluid path support mechanism 10. In FIG. 3C, the adjustment components 17a and 17b are provided for the first fluid outlet port 15a and the second fluid outlet port 15b respectively to accurately control flow rates of the first fluid outlet port 15a and the second fluid outlet port 15b, but it is only an example, and such control may also be implemented through a single switching member (such as but not limited to a three-way valve).

Specifically, a connection mode between the first fluid path assembly 10a and the second fluid path assembly 10b is not specifically limited, as long as the function can be implemented. For example, a flowmeter and a valve may be arranged at the first fluid outlet port 15a of the first fluid path assembly 10a, and a flowmeter and a valve may be arranged at the second fluid outlet port 15b of the second fluid path assembly 10b, and the valves of the two pipelines are connected with a main pipeline leading to the fluid inlet port, i.e., the single fluid inlet port 15c of the first cleaning cell 8. During operation, the controller 11 may obtain a flow rate in each fluid path by communicating with the flowmeter, and control the concentration of the cleaning agent in the second cleaning fluid by controlling each valve.

Similarly, the cleaning cavity fluid discharge port 16 may be connected to a discharge fluid path assembly 12a, and the discharge fluid path assembly 12a may be provided with an adjustment component 17c, to facilitate control of a flow rate of the discharged fluid by the controller 11.

FIG. 5 illustrates a block diagram of another configuration of a sample analyzer 1' according to an embodiment of the invention. A difference between the sample analyzer 1' and the sample analyzer 1 described in combination with FIG. 1 mainly lies in a cleaning fluid supply mechanism 6', and other similar members are not elaborated here. The cleaning fluid supply mechanism 6' may be configured to provide the first cleaning fluid to the inner cavity of the pipette needle 5. Any mechanism that can be used to provide the first cleaning fluid to the inner cavity of the pipette needle 5 may be used as the cleaning fluid supply mechanism 6', such as a stirring rod cleaning cell, in which a cleaning fluid is contained for cleaning the stirring rod and may be used as the first cleaning fluid. The first cleaning cell 8 or any flexibly selectable container in the movement trajectory of the pipette needle 5 may also be used as the cleaning fluid supply mechanism 6'. It should be noted that the cleaning fluid supply mechanism 6' may be a container, but is not limited thereto, and may also be an external pipeline, a cleaning fluid source and a cooperative power mechanism (actuating a feed of the first cleaning fluid to the inner cavity of the pipette needle 5), or the like.

Accordingly, the controller 11 may be configured to perform the following operations to implement the cleaning. The controller 11 may control the cleaning fluid supply mechanism 6' to provide the first cleaning fluid to the inner cavity of the pipette needle 5. For example, this operation may be achieved by the cleaning fluid supply mechanism 6', for example, to actively feed and/or inject the first cleaning fluid into the inner cavity of the pipette needle 5. This operation may also be achieved by the pipette needle 5 in combination with a power mechanism, for example, to draw the first cleaning fluid from the cleaning fluid supply mechanism 6'. This operation may also be achieved by an interaction between the cleaning fluid supply mechanism 6' and the pipette needle 5. The controller 11 may control a fluid path support mechanism 10' to provide the second cleaning fluid to the first cleaning cell 8. The first cleaning fluid and the second cleaning fluid are used as an inner-wall cleaning fluid and an outer-wall cleaning fluid respectively.

The controller 11 may control the moving component 4 to insert the pipette needle 5 into the second cleaning fluid in the first cleaning cell 8. Then, the controller 11 may control the ultrasonic source assembly 9 to provide the sound field vibration to the second cleaning fluid in the first cleaning cell 8 and the first cleaning fluid. The first cleaning fluid may be different from the second cleaning fluid. In this way, the outer wall of the pipette needle 5 is immersed into the second cleaning fluid while the inner cavity of the pipette needle 5 contains a different first cleaning fluid, and a targeted effective cleaning is performed on inner and outer walls in combination with the sound field vibration respectively.

The first cleaning fluid is different from the second cleaning fluid in terms of a type, concentration, aspirating volume, or the like of the cleaning fluid. Further, in a specific implementation, the type of the first cleaning fluid is different from that of the second cleaning fluid, or the type of the first cleaning fluid is the same as that of the second cleaning fluid but a concentration of the first cleaning fluid is different from that of the second cleaning fluid. The first cleaning fluid may be selected to have a type and concentration different from that of the second cleaning fluid based on a difference between a property of a pollutant in the inner cavity of the pipette needle 5 and a property of a pollutant on the outer wall of the pipette needle 5. For example, the first cleaning fluid may be a chemically erosive fluid to fully erode and decompose the pollutant (including a potential pollutant) on the inner wall, and the second cleaning fluid may be an alkaline solution, such as sodium hydroxide solution, strong potassium oxide solution, a surfactant with cleaning performance, or a mixture thereof, to activated separate and clean the pollutant usually generated on the outer wall.

In some embodiments, the type of the first cleaning fluid is the same as that of the second cleaning fluid, and the concentration of the first cleaning fluid is greater than that of the second cleaning fluid. During usage of the pipette needle 5, the inner wall of the pipette needle 5 is more polluted and more difficult to be cleaned than the outer wall of the pipette needle 5. The cleaning effect on the inner wall of the pipette needle 5 may be improved by making the first cleaning fluid have a concentration greater than that of the second cleaning fluid.

In some embodiments, the controller 11 may be further configured to, during controlling the fluid path support mechanism 10' to provide the second cleaning fluid to the first cleaning cell 8, control the fluid path support mechanism 10' to provide the third cleaning fluid to the first cleaning cell 8, and control the fluid path support mechanism 10' to provide the fourth cleaning fluid to the first cleaning cell 8. The second cleaning fluid is obtained by mixing the third cleaning fluid with the fourth cleaning fluid. The controller 11 may be further configured to, during controlling the fluid path support mechanism 10' to provide the second cleaning fluid to the first cleaning cell 8, control the cleaning fluid supply mechanism 6' to aspirate the third cleaning fluid from the first cleaning cell 8, to use the third cleaning fluid as the first cleaning fluid.

For example, the third cleaning fluid is a chemically erosive fluid, and the fourth cleaning fluid is water.

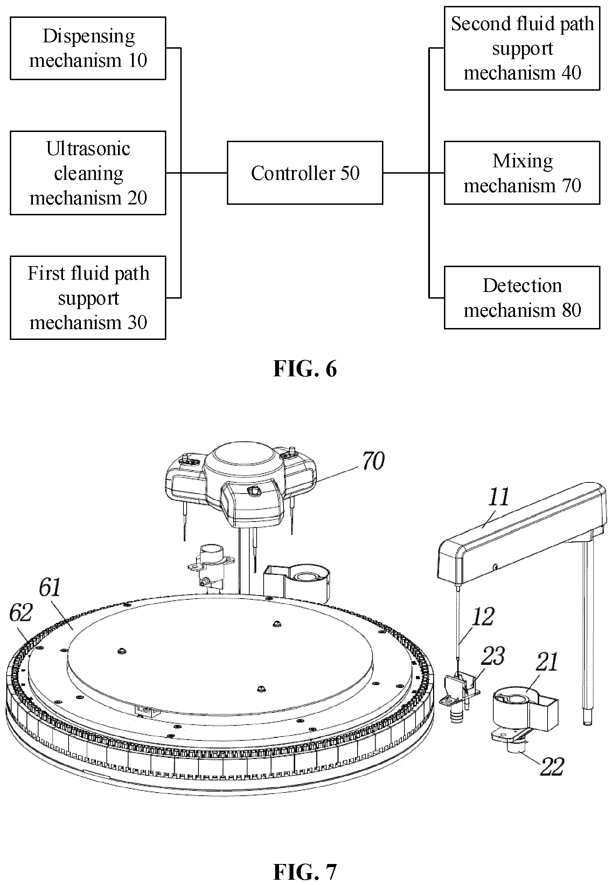

In a second embodiment, referring to FIGS. 6 and 7, a sample analyzer according to the embodiment of the invention includes a dispensing mechanism 10, an ultrasonic cleaning mechanism 20, a first fluid path support mechanism 30, a second fluid path support mechanism 40, and a controller 50.

The dispensing mechanism 10 includes a moving component 11 and a pipette needle 12 arranged on the moving component 11. The moving component 11 drives the pipette needle 12 to move among different operation positions, to aspirate or discharge a target fluid including at least one of a sample or a reagent.

Optionally, the dispensing mechanism 10 may include a sample dispensing mechanism 10. The sample dispensing mechanism 10 may include a first moving component and a sample needle arranged on the first moving component. The first moving component may drive the sample needle to move in a movement trajectory thereof, to aspirate or discharge the sample. For example, the first moving component may drive the sample needle to aspirate the sample from a sample tube at a sample position, and then drive the sample needle to move to a reaction disk 61 and discharge the aspirated sample into a reaction cuvette 62 on the reaction disk 61.

Optionally, the dispensing mechanism 10 may further include a reagent dispensing mechanism 10. The reagent dispensing mechanism 10 may include a second moving component and a reagent needle arranged on the second moving component. The second moving component may drive the reagent needle to move in a movement trajectory thereof, to aspirate or discharge the reagent. For example, the second moving component may drive the reagent needle to move between a reagent disk and the reaction disk 61, to aspirate the reagent from a reagent container on the reagent disk and discharge the reagent into the reaction cuvette 62 on the reaction disk 61. The reagent is mixed with the sample in the reaction cuvette 62 to incubate a reaction fluid.

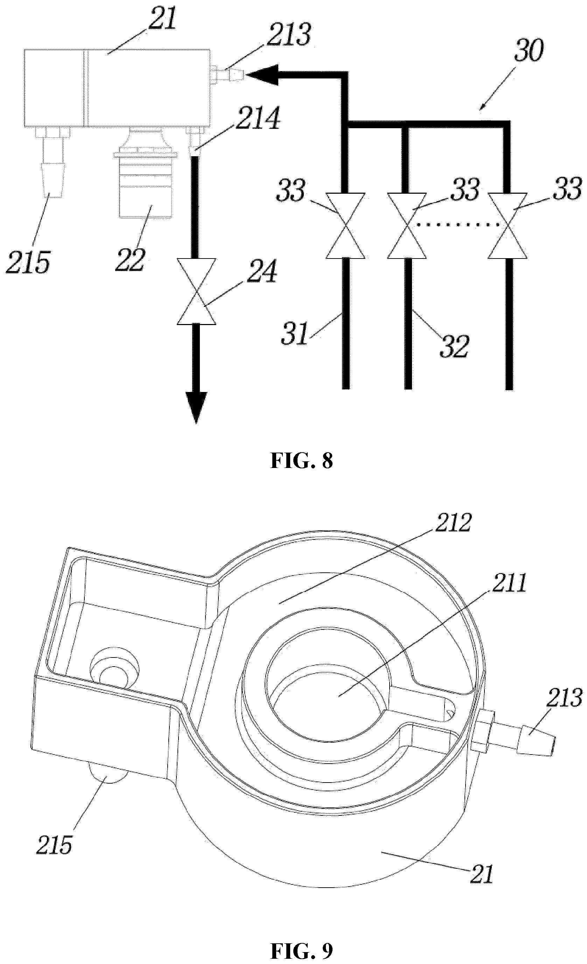

The ultrasonic cleaning mechanism 20 includes a first cleaning cell 21 containing a cleaning fluid and an ultrasonic source assembly 22 configured to provide a sound field vibration to the cleaning fluid in the first cleaning cell 21, as shown in FIG. 8.

Optionally, the first cleaning cell 21 may be a cleaning cell dedicated to clean the sample needle, and may be arranged on the movement trajectory of the sample needle. The first cleaning cell 21 may also be a cleaning cell dedicated to clean the reagent needle, and may be arranged on the movement trajectory of the reagent needle. When the sample analyzer is configured with both the sample needle and the reagent needle, the first cleaning cell 21 may be arranged at a position where the movement trajectories of the sample needle and the reagent needle intersect, and the first cleaning cell 21 may be shared by the sample needle and the reagent needle. In another example, each of the sample needle and the reagent needle may be configured with a respective first cleaning cell 21.

Optionally, as shown in FIGS. 8 to 10, the first cleaning cell 21 is provided with a cleaning cavity 211 and an overflow cavity 212. The cleaning cavity 211 contains the cleaning fluid for cleaning the pipette needle 12, and the overflow cavity 212 receives the cleaning fluid overflown from the cleaning cavity 211. Optionally, the cleaning cavity 211 may be cylindrical, open at the top, and arranged in the middle, the overflow cavity 212 may be arranged around the cleaning cavity 211, and a fluid inlet port 213 of the cleaning cavity 211 may extend beyond the overflow cavity 212 through a channel. A first fluid discharge port 214 may be arranged at a bottom of the cleaning cavity 211 and configured to discharge the cleaning fluid from the cleaning cavity 211. A second fluid discharge port 215 may be arranged at a bottom of the overflow cavity 212 and configured to discharge the cleaning fluid from the overflow cavity 212.

Optionally, the ultrasonic source assembly 22 may be arranged, for example at a bottom of the first cleaning cell 21, and configured to transmit the sound field vibration to the cleaning fluid in the first cleaning cell 21 through the bottom of the first cleaning cell 21, to perform an ultrasonic cleaning on an outer wall of the pipette needle 12 through the cleaning fluid.

Optionally, the ultrasonic source assembly 22 includes an ultrasonic transducer 221 and a transmission component 222. The ultrasonic transducer 221 is connected to an end of the transmission component 222, and the other end of the transmission component 222 is abutted against the bottom of the first cleaning cell 21. The ultrasonic transducer 221 generates a sound field vibration, and the sound field vibration is transmitted to the first cleaning cell 21 through the transmission component 222, and transmitted to the cleaning fluid in the first cleaning cell 21 through the first cleaning cell 21.

It should be understood that the above specific structures of the first cleaning cell 21 and the ultrasonic source assembly 22 are exemplary. In a specific implementation, the first cleaning cell 21 or the ultrasonic source assembly 22 may be of other structures that meet a basic usage function.

The first fluid path support mechanism 30 provides a first cleaning fluid to the first cleaning cell 21.

Optionally, the first cleaning fluid may have been prepared before it is added to the sample analyzer, or the first cleaning fluid may also be a cleaning fluid with a single composition. The first fluid path support mechanism 30 may directly provide the first cleaning fluid to the first cleaning cell 21. In this case, the first fluid path support mechanism 30 may include, for example, a first cleaning fluid supply component, an infusion pump and an electric control valve which are connected in sequence. The electric control valve may be connected to the first cleaning cell 21 through an infusion pipeline. The controller 50 may be connected to the electric control valve and the infusion pump. The first cleaning fluid provided by the first cleaning fluid supply component may be delivered to the first cleaning cell 21 by turning on the infusion pump and the electric control valve.

Optionally, the first fluid path support mechanism 30 may also be configured to obtain various compositions, perform a real-time mixing to form the first cleaning fluid, and provide the first cleaning fluid formed by real-time mixing to the first cleaning cell 21. For example, the first cleaning fluid may be formed by mixing a cleaning agent with cleaning water. In this case, the first fluid path support mechanism 30 may include a first fluid path assembly 31 for supplying the cleaning agent and a second fluid path assembly 32 for supplying the cleaning water, and the first cleaning fluid is formed by mixing the cleaning agent with the cleaning water.

Optionally, the first fluid path assembly 31 is provided with a first fluid outlet port, the second fluid path assembly 32 is provided with a second fluid outlet port, and the first cleaning cell 21 is provided with a fluid inlet port 213 communicated with the first fluid outlet port and the second fluid outlet port through respective adjustment components 33, as shown in FIG. 8. The controller 50 may control a degree of opening of the first fluid outlet port and the second fluid outlet port through the respective adjustment components 33, so as to adjust a flow rate outputted from the first fluid outlet port and a flow rate outputted from the second fluid outlet port respectively, thereby adjusting a proportion of the cleaning agent and the cleaning water. The first cleaning fluid is formed by mixing the cleaning agent with the cleaning water in an appropriate proportion, and provided to the first cleaning cell 21. In a specific implementation, the first fluid path support mechanism 30 may further include a third fluid path assembly, or even more fluid path assemblies, to provide other fluids to the first cleaning cell 21.

The second fluid path support mechanism 40 injects a second cleaning fluid into an inner cavity of the pipette needle 12.

Optionally, the second fluid path support mechanism 40 may include a second cleaning fluid supply component, a pumping component and a control valve which are connected in sequence. The control valve has an end communicated with the pumping component and another end communicated with the inner cavity of the pipette needle 12. The controller 50 may turn on the pumping component and the control valve to inject the second cleaning fluid provided by the second cleaning fluid supply component into the inner cavity of the pipette needle 12, and turn off the pumping component and the control valve after the second cleaning fluid is injected into the inner cavity of the pipette needle 12, to stop injecting the second cleaning fluid into the inner cavity of the pipette needle 12.

The controller 50 is configured to: control the first fluid path support mechanism 30 to provide the first cleaning fluid to the first cleaning cell 21; control the second fluid path support mechanism 40 to inject the second cleaning fluid into the inner cavity of the pipette needle 12; control the moving component 11 to at least partially insert the pipette needle 12 into the first cleaning fluid in the first cleaning cell 21; and control the ultrasonic source assembly 22 to provide the sound field vibration to the first cleaning fluid in the first cleaning cell 21 and the second cleaning fluid in the inner cavity of the pipette needle 12.

Optionally, the controller 50 includes a processor and a storage medium in which a computer program is stored. Specifically, the controller 50 includes at least a processing component, a Random Access Memory (RAM), a Read-Only Memory (ROM), a communication interface, a memory and an Input/Output (I/O) interface. The processing component, RAM, ROM, the communication interface, the memory and the I/O interface communicate with each other through a bus. The processing component may be CPU, a Graphic Processing Unit (GPU), or other chips with an operational capability. The memory is configured to store various computer programs executable by the processor component, such as an operating system (OS), an application program, or the like, and data required for executing the computer programs. Furthermore, when there is data needed to be stored locally during a sample analysis, it may be stored in the memory. The I/O interface includes: a serial interface such as Universal Serial Bus (USB), Institute of Electrical and Electronic Engineers (IEEE), Recommended Standard-version C (RS-C), or the like; a parallel interface such as Small Computer System Interface (SCSI), Integrated Drive Electronics (IDE), IEEE, or the like; and an analog signal interface including a Digital/Analog (D/A) converter, an Analog/Digital (A/D) converter, or the like. An input device including a keyboard, a mouse, a touch screen or another control button is connected to the I/O interface, and the user may directly input data to the controller 50 with the input device. Furthermore, a display device with display function, such as a fluid crystal screen, a touch screen, a Light Emitting Diode (LED) display screen, or the like may also be connected to the I/O interface. The controller 50 may output the processed data to the display device to display as image display data, such as analysis data, an instrument operation parameter, or the like. The communication interface may be a currently known interface with any communication protocol. The communication interface communicates with the outside through a network. The controller 50 may transmit data with any device connected through the network via the communication interface with a certain communication protocol.

The sample analyzer may further include a mixing mechanism 70. The mixing mechanism 70 may include a driving component and a stirring rod arranged on the driving component, and the driving component drives the stirring rod to stir the target fluid. For example, the driving component may drive the stirring rod to stir the reaction fluid in the reaction cuvette 62.

The sample analyzer may further include, for example a detection mechanism 80 for detecting the reaction fluid in the reaction cuvette 62, to obtain a detection result. For example, the detection mechanism may detect a luminous intensity of the reaction fluid to determine a concentration of a target composition in the sample, or the like.

In the sample analyzer according to the embodiment of the invention, the first fluid path support mechanism 30 and the second fluid path support mechanism 40 are configured for the first cleaning cell 21 and the pipette needle 12 respectively. The first fluid path support mechanism 30 provides the first cleaning fluid to the first cleaning cell 21, the second fluid path support mechanism 40 provides the second cleaning fluid to the pipette needle 12, and the ultrasonic source assembly 22 provides the sound field vibration to the first cleaning fluid in the first cleaning cell 21 and the second cleaning fluid in the inner cavity of the pipette needle 12, to perform an ultrasonic cleaning on the outer wall of the pipette needle 12 by the first cleaning fluid and perform an ultrasonic cleaning on the inner wall of the pipette needle 12 by the second cleaning fluid, which may not only simplify the operation process, improve the cleaning efficiency, but also effectively diffuse and peel residues, and have a good cleaning effect.

In a specific implementation, there is no definite sequential order between an operation of controlling the second fluid path support mechanism 40 to inject the second cleaning fluid into the inner cavity of the pipette needle 12, and two operations of controlling the first fluid path support mechanism 30 to provide the first cleaning fluid to the first cleaning cell 21 and controlling the moving component 11 to at least partially insert the pipette needle 12 into the first cleaning fluid in the first cleaning cell 21. The operation of injecting the second cleaning fluid into the inner cavity of the pipette needle 12 may be performed synchronously with either of the two operations, or may also be performed separately. From the perspective of improving the cleaning efficiency, the operation of injecting the second cleaning fluid into the inner cavity of the pipette needle 12 may be performed synchronously with one of the two operations, to shorten a cleaning time and improve the cleaning efficiency.

In an optional embodiment, the controller 50 is further configured to: control the second fluid path support mechanism 40 to inject the second cleaning fluid into the pipette needle 12, before the pipette needle 12 is moved to the first cleaning cell 21. Optionally, the controller 50 may synchronously control the second fluid path support mechanism 40 to inject the second cleaning fluid into the pipette needle 12 during controlling the first fluid path support mechanism 30 to provide the first cleaning fluid to the first cleaning cell 21. During this process, the controller 50 may also synchronously control the moving component 11 to drive the pipette needle 12 to move to the first cleaning cell 21.

In another optional embodiment, the controller 50 is further configured to: control the second fluid path support mechanism 40 to inject the second cleaning fluid into the pipette needle 12 during the pipette needle 12 moves down to the first cleaning cell. That is to say, the controller 50 controls the moving component 11 to drive the pipette needle 12 to drop, and synchronously controls the second fluid path support mechanism 40 to inject the second cleaning fluid into the pipette needle 12. The first fluid path support mechanism 30 may also synchronously provide the first cleaning fluid to the first cleaning cell 21 during the drop of the pipette needle 12. Alternatively, the first fluid path support mechanism 30 may have finished the operation of injecting the first cleaning fluid to the first cleaning cell 21.

In a specific implementation, the first cleaning fluid may have a same composition as the second cleaning fluid or have a different composition from the second cleaning fluid. When the first cleaning fluid has the same composition as the second cleaning fluid, the first fluid path support mechanism 30 and the second fluid path support mechanism 40 may obtain the cleaning fluid from a same cleaning fluid supply component, that is to say, a source of the first cleaning fluid may be the same as that of the second cleaning fluid at this time.

In some embodiments, the first cleaning fluid is different in composition or source from the second cleaning fluid. The first cleaning fluid may also be different in both composition and source from the second cleaning fluid. At this time, the sample analyzer may configure, for the first fluid path support mechanism 30, the first cleaning fluid supply component for providing the first cleaning fluid, and configure, for the second fluid path support mechanism 40, the second cleaning fluid supply component for providing the second cleaning fluid.

Optionally, the first cleaning fluid may be a chemically erosive fluid, and the second cleaning fluid may be the cleaning water. The chemically erosive fluid may include, for example an acidic cleaning fluid, an alkaline cleaning fluid, a strong oxidizing cleaning fluid, or a base cleaning fluid. For example, the first cleaning fluid may be formed by mixing the cleaning agent with the cleaning water. The chemically erosive fluid is used as the first cleaning fluid, so that the outer wall of the pipette needle 12 may be cleaned efficiently. The cleaning water is used as the second cleaning fluid, and a contamination of a fluid path system of the pipette needle 12 may be avoided.

Optionally, when the second cleaning fluid is the cleaning water, the second cleaning fluid supply component includes a water tank, and the second fluid path support mechanism 40 further includes a syringe and a motor. The syringe has an end connected to the control valve and another end communicated with the inner cavity of the pipette needle 12. The motor is connected to and drives the syringe, and the controller 50 is further configured to control the motor to drive the syringe, to provide power for aspirating and discharging the target fluid.

The control valve is turned off when it is required to provide power to the pipette needle 12 for aspirating and discharging the target fluid. At this time, the syringe is communicated with the pipette needle 12 only. The motor may be controlled to drive a plunger of the syringe to move, to provide the power to the pipette needle 12 for aspirating and discharging the target fluid.

The control valve and the pumping component may be turned on when it is required to provide the second cleaning fluid to the pipette needle 12. The second cleaning fluid provided by the second cleaning fluid supply component is transferred to the syringe, the motor is controlled to drive the plunger of the syringe to move, to provide the second cleaning fluid to the pipette needle 12.

In this way, the second fluid path support mechanism 40 not only provides power to the pipette needle 12 for aspirating and discharging the target fluid, but also can provide the second cleaning fluid to the pipette needle 12, which expands a function of the second fluid path support mechanism 40 and is beneficial to simplify a structure of the sample analyzer.

In some embodiments, the first fluid path support mechanism 30 and the second fluid path support mechanism 40 share a power component. For example, the first fluid path support mechanism 30 and the second fluid path support mechanism 40 may share the pumping component, the pumping component may be connected to the first cleaning fluid supply component and the second cleaning fluid supply component through different fluid paths respectively, and connected to the pipette needle 12 and the first cleaning cell 21 through different fluid paths respectively. Connection paths for the pumping component may be switched by the control valve, to provide the first cleaning fluid to the first cleaning cell 12 through the pumping component, or provide the second cleaning fluid to the pipette needle 12 through the pumping component. For another example, the first fluid path support mechanism 30 and the second fluid path support mechanism 40 may share a part of power components. When the first cleaning fluid is formed by mixing the cleaning agent with the cleaning water and the second cleaning fluid is the cleaning water, the first fluid path support mechanism 30 and the second fluid path support mechanism 40 may share a water tank and a pumping component for providing the cleaning water, and the pumping component provides the cleaning water to the first cleaning cell 12 and the pipette needle 12 respectively. The first fluid path support mechanism 30 may further include another pumping component for providing a cleaning fluid to the first cleaning cell 12. Sharing of power components is beneficial to simplify the structure of the sample analyzer, reduce a cost for producing the sample analyzer, and achieve miniaturization of the sample analyzer.

In some embodiments, the controller 50 is further configured to: turn on the pumping component and the control valve before controlling the second fluid path support mechanism 40 to inject the second cleaning fluid into the inner cavity of the pipette needle 12, to wash the inner cavity of the pipette needle 12 by the second cleaning fluid; and turn off the pumping component and the control valve after washing the inner cavity of the pipette needle 12 for a first preset duration. That is to say, the inner cavity of the pipette needle 12 may be washed by the second cleaning fluid before the ultrasonic cleaning is performed on the inner cavity of the pipette needle 12 by using the second cleaning fluid. In this way, a pollutant which is easy to be removed may be washed away, and then a pollutant which is hard to be cleaned may be removed by the ultrasonic cleaning, thereby improving the cleaning effect.

In some embodiments, the sample analyzer further includes a fluid discharge mechanism 24. The first cleaning cell 21 is provided with a fluid discharge port, and the fluid discharge mechanism 24 discharges the first cleaning fluid in the first cleaning cell 21 through the fluid discharge port. The controller 50 is further configured to: close the ultrasonic source assembly 22 and control the fluid discharge mechanism 24 to discharge the first cleaning fluid in the first cleaning cell 21, after the ultrasonic source assembly 22 provides the sound field vibration to the first cleaning fluid in the first cleaning cell 21 for the second preset duration and/or a first preset number of times; and control the pipette needle 12 to discharge the second cleaning fluid.

Optionally, the fluid discharge mechanism 24 may be connected to the first fluid discharge port 214 of the cleaning cavity 211 and the second fluid discharge port 215 of the overflow cavity 212 respectively. The ultrasonic source assembly 22 may be turned off after providing the sound field vibration to the first cleaning fluid in the first cleaning cell 21 for the second preset duration and/or the first preset number of times, to stop ultrasonic cleaning. The fluid discharge mechanism 24 is controlled to discharge the first cleaning fluid in the first cleaning cell 21, and the pipette needle 12 is controlled to discharge the second cleaning fluid. The second cleaning fluid may also be discharged into the first cleaning cell 21, and then discharged by the fluid discharge mechanism 24 of the first cleaning cell 21. In a specific implementation, the first cleaning fluid and the second cleaning fluid may be discharged synchronously. In another example, the second cleaning fluid may be discharged into the first cleaning cell 21 first, and then the second cleaning fluid together with the first cleaning fluid are discharged by the fluid discharge mechanism 24.

The second preset duration and the first preset number of times may vary according to different cleaning modes. For example, in a cleaning process for each detection cycle, the cleaning duration may be configured to be shorter, and the number of times of ultrasonic cleaning may be configured to be smaller. In a regular daily or weekly cleaning process, the cleaning duration may be configured to be longer, and the number of times of ultrasonic cleaning may be configured to be greater. The cleaning duration and the number of times may be configured according to actual situations, to clean the pollutant thoroughly.

In some embodiments, the first fluid path support mechanism 30 is further configured to provide a third cleaning fluid to the first cleaning cell 21. After turning off the ultrasonic source assembly 22 and controlling the fluid discharge mechanism 24 to discharge the first cleaning fluid in the first cleaning cell 21, the controller 50 is further configured to: control the pipette needle 12 to discharge the second cleaning fluid; control the second fluid path support mechanism 40 to provide the second cleaning fluid or the fourth cleaning fluid to the inner cavity of the pipette needle 12; control the first fluid path support mechanism 30 to provide the third cleaning fluid to the first cleaning cell 21; control the moving component 11 to at least partially insert the pipette needle 12 into the third cleaning fluid in the first cleaning cell 21; control the ultrasonic source assembly 22 to provide the sound field vibration to the third cleaning fluid in the first cleaning cell 21; turn off the ultrasonic source assembly 22 and control the fluid discharge mechanism 24 to discharge the third cleaning fluid in the first cleaning cell 21, after providing the sound field vibration to the third cleaning fluid for a third preset duration and/or a second preset number of times; and control the pipette needle 12 to discharge the second cleaning fluid or the fourth cleaning fluid.

That is to say, the pipette needle 12 may be cleaned with various cleaning fluids. For example, firstly, the first cleaning cell 21 may be provided with an acidic cleaning fluid through the first fluid path support mechanism 30, and the inner cavity of the pipette needle 12 may be provided with the cleaning water through the second fluid path support mechanism 40. The pipette needle 12 is inserted into the acidic cleaning fluid in the first cleaning cell 21, the sound field vibration is provided by the ultrasonic source assembly 22 to the acidic cleaning fluid in the first cleaning cell 21, and is transmitted to the cleaning water in the inner cavity of the pipette needle 12 through the acidic cleaning fluid. The outer wall of the pipette needle 12 is ultrasonically cleaned by the acidic cleaning fluid, and the inner wall of the pipette needle 12 is ultrasonically cleaned by the cleaning water.

The ultrasonic source assembly 22 is turned off after the sound field vibration is provided for the second preset duration and/or the first preset number of times, to stop the ultrasonic cleaning. The pipette needle 12 is controlled to discharge the second cleaning fluid, and at least the first cleaning fluid in the first cleaning cell 21 is discharged by the fluid discharge mechanism. Then, the first fluid path support mechanism 30 provides, for example an alkaline cleaning fluid to the first cleaning cell 21, and the second fluid path support mechanism 40 provides, for example the cleaning water or a base cleaning fluid to the inner cavity of the pipette needle 12. The ultrasonic source assembly 22 is turned on to provide the sound field vibration to the alkaline cleaning fluid in the first cleaning cell 21, and the sound field vibration is transmitted to the cleaning water or the base cleaning fluid in the inner cavity of the pipette needle 12. The outer wall of the pipette needle 12 is ultrasonically cleaned by the alkaline cleaning fluid, and the inner cavity of the pipette needle 12 is ultrasonically cleaned by the cleaning water or the base cleaning fluid.

The ultrasonic source assembly 22 is turned off after providing the sound field vibration to the alkaline cleaning fluid for the third preset duration and/or the second preset number of times, to stop providing the sound field vibration. The fluid discharge mechanism 24 is controlled to discharge the alkaline cleaning fluid in the first cleaning cell 21, and the pipette needle 12 is controlled to discharge the cleaning water or the base cleaning fluid.

It should be understood that, after discharging the alkaline cleaning fluid, the first cleaning cell 21 may further be provided with for example a strong oxidizing cleaning agent, and the inner cavity of the pipette needle 12 is provided with the cleaning water or other cleaning fluids. The ultrasonic source assembly 22 is controlled to provide the sound field vibration to the strong oxidizing cleaning agent in the first cleaning cell 21, to perform the ultrasonic cleaning on the outer wall of the pipette needle 12, and the inner cavity of the pipette needle 12 is ultrasonically cleaned with the cleaning water or other cleaning fluids.

It should be noted that the above examples of the first cleaning fluid, the second cleaning fluid, the third cleaning fluid and the fourth cleaning fluid are only exemplary, and the four cleaning fluids may be configured according to a cleaning mode and a test item in the sample analyzer.

In some embodiments, the sample analyzer further includes a second cleaning cell 23 and a third fluid path support mechanism for providing the cleaning water to the second cleaning cell 23. The second fluid path support mechanism 40 further provides the cleaning water to the inner cavity of the pipette needle 12. During controlling the pipette needle 12 to discharge the second cleaning fluid, the controller 50 is further configured to: control the pipette needle 12 to move to the second cleaning cell 23 to discharge the second cleaning fluid.

After controlling the pipette needle 12 to discharge the second cleaning fluid, the controller 50 is further configured to: control the third fluid path support mechanism to provide the cleaning water to the second cleaning cell 23, to clean the outer wall of the pipette needle 12 by the cleaning water; and control the second fluid path support mechanism to provide the cleaning water to the inner cavity of the pipette needle 12, to wash the inner wall of the pipette needle 12.

Optionally, the third fluid path support mechanism may include a third cleaning fluid supply component for providing the cleaning water, a pumping component and a control valve. The control valve is connected to the pumping component and the second cleaning cell 23. The third cleaning fluid supply component may be for example a water tank. Optionally, the third fluid path support mechanism and the second fluid path support mechanism 40 may also share the water tank, the pumping component, and the control valve, and the control valve may be connected to the second cleaning cell 23 and the inner cavity of the pipette needle 12 through different fluid paths respectively.

After the ultrasonic cleaning is completed, the movement component 11 may be controlled to drive the pipette needle 12 to move from the first cleaning cell 21 to the second cleaning cell 23, and the pipette needle 12 is controlled to discharge the second cleaning fluid to the second cleaning cell 23. Then, the third fluid path support mechanism is controlled to provide the cleaning water to the second cleaning cell 23 to clean the outer wall of the pipette needle 12 by the cleaning water. In this way, the first cleaning fluid and/or the third cleaning fluid on the outer wall of the pipette needle 12 may be cleaned. The second fluid path support mechanism 40 is controlled to provide the cleaning water to the inner cavity of the pipette needle 12 to wash away the pollutant, the second cleaning fluid and/or the fourth cleaning fluid on the inner wall of the pipette needle 12. In this way, not only the pollutant may be cleaned thoroughly, but also various kinds of cleaning fluids may be cleaned, so as to avoid an influence of the cleaning fluids on subsequent test results.

In some embodiments, the first fluid path support mechanism 30 further provides the cleaning water to the first cleaning cell 21, and the controller 50 is further configured to: control the first fluid path support mechanism 30 to provide the cleaning water to the first cleaning cell 21, after controlling the fluid discharge mechanism 24 to discharge the first cleaning fluid or the third cleaning fluid; and control the fluid discharge mechanism 24 to discharge the cleaning water in the first cleaning cell 21, after providing the cleaning water for the third preset duration.

After the ultrasonic cleaning is performed on the pipette needle 12 by the first cleaning fluid or the third cleaning fluid, the first fluid path support mechanism 30 may be controlled to provide the cleaning water to the first cleaning cell 21, and the first cleaning cell 21 is washed by the cleaning water, to avoid the first cleaning cell 21 being stained with the pollutant, the first cleaning fluid or the third cleaning fluid, thereby ensuring the cleaning effect of the first cleaning cell 21. Optionally, the first fluid path support mechanism 30 may be controlled to provide the cleaning water to the cleaning cavity 211 of the first cleaning cell 21 for the third preset duration, so that at least part of the cleaning water overflows to the overflow cavity 212, and then, the fluid discharge mechanism 24 is controlled to discharge the cleaning water in the cleaning cavity 211 and the overflow cavity 212.

In some embodiments, the sample analyzer further includes a fluid level detection component configured to detect a fluid level of a fluid in the first cleaning cell 21. The controller 50 is further configured to: obtain the fluid level detected by the fluid level detection component; and control the first fluid path support mechanism 30 to provide the first cleaning fluid or the third cleaning fluid to the first cleaning cell 21, when the fluid level is lower than a first preset fluid level.

The first preset fluid level is a fluid level threshold representing thorough discharge of fluid in the first cleaning cell 21.

Optionally, the controller 50 may control the second fluid path assembly 32 to provide the cleaning water to the first cleaning cell 21, to wash the first cleaning cell 21, and then control the fluid discharge mechanism 24 to discharge the cleaning water in the first cleaning cell 21, before controlling the first fluid path support mechanism 30 to provide the first cleaning fluid to the first cleaning cell 21. After that, it may be determined whether the cleaning water in the first cleaning cell 21 is discharged thoroughly according to the fluid level detected by the fluid level detection component, that is, it may be determined whether the fluid level detected by the fluid level detection component is lower than the first preset fluid level. The first fluid path support mechanism 30 is controlled to provide the first cleaning fluid to the first cleaning cell 21, only when it is determined that the fluid level detected by the fluid level detection component is lower than the first preset fluid level.

Optionally, the controller 50 may determine whether the fluid level detected by the fluid level detection component is lower than the first preset fluid level, to determine whether the first cleaning fluid is discharged thoroughly, after controlling the fluid discharge mechanism 24 to discharge the first cleaning fluid in the first cleaning cell 21. The controller 50 may determine that the first cleaning fluid is discharged thoroughly when it is determined that the fluid level detected by the fluid level detection component is lower than the first preset fluid level. Then, the first fluid path support mechanism 30 is controlled to provide the third cleaning fluid to the first cleaning cell 21.

In this way, an impact on a next cleaning due to the residual of the used cleaning fluid in the first cleaning cell 21 may be avoided.

In some embodiments, the sample analyzer further includes the fluid level detection component configured to detect a fluid level of a fluid in the first cleaning cell 21. The controller 50 is further configured to: obtain the fluid level detected by the fluid level detection component, after the first fluid path support mechanism 30 providing the first cleaning fluid or the third cleaning fluid to the first cleaning cell 21; and control the ultrasonic source assembly 22 to provide the sound field vibration to the first cleaning fluid or the third cleaning fluid in the first cleaning cell 21, when an absolute value of a difference between the fluid level and a second preset fluid level is less than a preset difference.

In a specific implementation, a target fluid level, at which the first cleaning fluid or the third cleaning fluid in the first cleaning cell 21 can submerge a target needle rod section of the pipette needle 12 when the pipette needle 12 drops to a target position, may be detected, and the preset difference is configured based on the target fluid level to form the second preset fluid level. The target needle rod section of the pipette needle 12 may be submerged when the absolute value of the difference between the fluid level in the first cleaning cell 21 and the second preset fluid level is less than the preset difference. The target needle rod section is a needle rod section that may be contaminated with the target fluid when the pipette needle 12 aspirates and/or discharges the target fluid.

Before starting the ultrasonic cleaning, the fluid level of the first cleaning cell 22 may be detected by the fluid level detection component. The ultrasonic source assembly 22 is controlled to provide the sound field vibration to the first cleaning fluid or the third cleaning fluid in the first cleaning cell 21, when it is determined that the absolute value of the difference between the fluid level detected by the fluid level detection component and the second preset fluid level is less than the preset difference. The volume of the first cleaning fluid or the third cleaning fluid in the first cleaning cell 21 is less or excessive, when it is determined that the absolute value of the difference between the fluid level detected by the fluid level detection component and the second preset fluid level is greater than the preset difference. In this case, the first fluid path support mechanism 30 may be controlled to continue to add the first cleaning fluid or the third cleaning fluid to the first cleaning cell 21, or the fluid discharge mechanism 24 may be controlled to discharge a part of the first cleaning fluid or the third cleaning fluid in the first cleaning cell 21. In this way, a cleaning effect on the target needle rod section of the pipette needle 12 may be ensured.

Optionally, the controller 50 is further configured to control the moving component 11 to drive the pipette needle 12 to drop to a preset height, and then control the ultrasonic source assembly 22 to provide the sound field vibration, when the absolute value of the difference between the fluid level and the second preset fluid level is less than the preset difference.

That is to say, the moving component 11 is controlled to drive the pipette needle 12 to drop to the preset height, after the first cleaning fluid or the third cleaning fluid in the first cleaning cell 21 reaches an appropriate fluid level. In this way, the needle rod section of the pipette needle 12 that does not need to be cleaned may be avoided being contaminated with the first cleaning fluid or the third cleaning fluid.

In some embodiment, the first cleaning cell 21 is provided with a cleaning cavity 211 and an overflow cavity 212. The pipette needle 12 is inserted into a cleaning fluid in the cleaning cavity 211, and the overflow cavity 212 receives the cleaning fluid overflown from the cleaning cavity 211. The controller 50 is further configured to control the first fluid path support mechanism 30 to provide the first cleaning fluid to the cleaning cavity 211 for a fourth preset duration, to enable the first cleaning fluid in the cleaning cavity 211 to overflow to the overflow cavity 212.

The cleaning cavity 211 is configured to clean the pipette needle 12, and the overflow cavity 212 is configured to receive the cleaning fluid overflown from the cleaning cavity 211. When the cleaning cavity 211 is not cleaned thoroughly after a last cleaning operation, part of the pollutants or cleaning fluids may remain in the cleaning cavity 211, and the first cleaning fluid added to the cleaning cavity 211 initially may be contaminated with the part of pollutants or cleaning fluids. Therefore, the first fluid path support mechanism 30 is controlled to provide the first cleaning fluid to the cleaning cavity 211, and to enable part of the first cleaning fluid to overflow to the overflow cavity 212, so as to wash the cleaning cavity 211 by the first cleaning fluid. Therefore, the first cleaning fluid in the cleaning cavity 211 is kept as pure as possible, to ensure a good cleaning effect and avoid the residual pollutant or cleaning fluid affecting the cleaning effect.

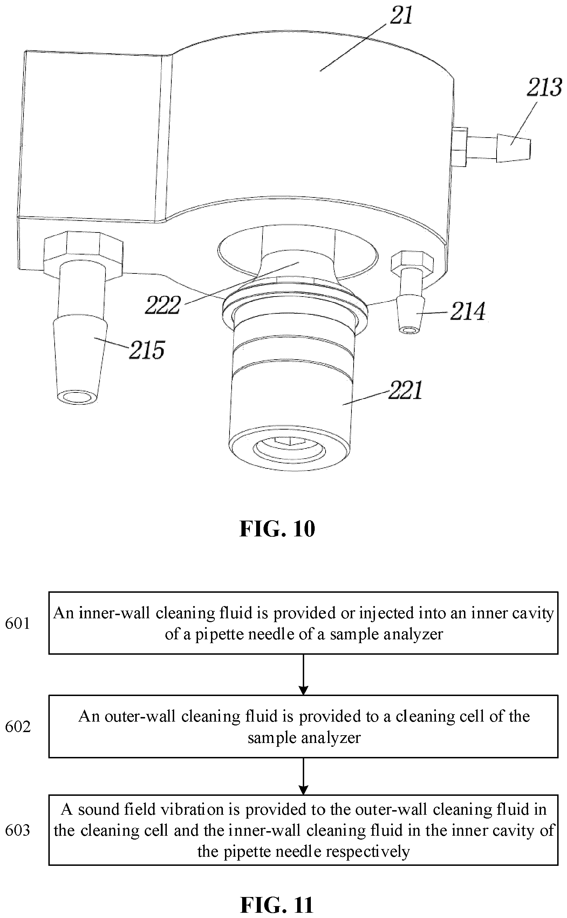

FIG. 11 illustrates a flowchart of a cleaning control method for a sample analyzer according to an embodiment of the invention. The cleaning control method is applicable to the sample analyzers according to various embodiments of the invention. Specifically, the cleaning control method may include the following operations performed by the controller 11 in various sample analyzers. For example, the sample analyzer may be constructed as shown in FIGS. 1, 2A and 2B, but is not limited thereto, and any structure of the sample analyzer may be applicable, as long as the following operations may be performed by such structure.

In operation 601, an inner-wall cleaning fluid is provided (for example, injected) into an inner cavity of a pipette needle of the sample analyzer. For example, referring to FIGS. 1 and 2A, the moving component 4 may be controlled to move the pipette needle 5 to the first position, to aspirate the first cleaning fluid from the first container 6. Alternatively, the first cleaning fluid may be injected into the inner cavity of the pipette needle 5 by the second fluid path support mechanism.

In operation 602, an outer-wall cleaning fluid is provided to a cleaning cell of the sample analyzer. Specifically, referring to FIGS. 1 and 2B, the first fluid path support mechanism 10 may be controlled to provide the outer-wall cleaning fluid to the first cleaning cell 8. The inner-wall cleaning fluid has a source different from that of the outer-wall cleaning fluid, or the inner-wall cleaning fluid is different from the outer-wall cleaning fluid. The pipette needle 5 is at least partially inserted into the outer-wall cleaning fluid in the first cleaning cell 8.

In operation 603, a sound field vibration is provided to the outer-wall cleaning fluid in the cleaning cell and the inner-wall cleaning fluid in the inner cavity of the pipette needle, to transmit the sound field vibration to outer and inner walls of the pipette needle. For example, referring to FIGS. 1 and 2B, the ultrasonic source assembly 9 is controlled to provide the sound field vibration to the outer-wall cleaning fluid in the first cleaning cell 8 and the inner-wall cleaning fluid in the inner cavity of the pipette needle 5.

According to the cleaning control method, when the inner cavity of the pipette needle contains the first cleaning fluid and the outer wall of the pipette needle is immersed into the second cleaning fluid, the inner and outer walls can be cleaned effectively in a targeted manner in combination with the sound field vibration. Furthermore, the inner-wall cleaning fluid of the pipette needle and the outer-wall cleaning fluid in the cleaning cell may be adaptively adjusted respectively. For example, in the control method, a strong alkaline solution may be selected to enter the pipette needle, and then, the pipette needle is inserted into another cleaning fluid for ultrasonic cleaning. In particular, the inner-wall cleaning fluid of the pipette needle may be selected flexibly, so that a cleaning fluid with a better cleaning effect is selected based on the property of the pollutant in the inner cavity of the pipette needle, thereby improving a cleaning effect of the pipette needle.

In some embodiments, the operation of providing the inner-wall cleaning fluid to the pipette needle of the sample analyzer may include the following operations. The pipette needle is controlled to aspirate the inner-wall cleaning fluid from a target position which does not overlap with a position where the cleaning cell is located, to improve the cleaning efficiency and avoid a cross contamination among different cleaning fluids.

In some embodiments, the cleaning control method may further include the following operation. The pipette needle is controlled to aspirate air to form a first air section with a volume of 1µl to 5µl, before the pipette needle aspirating the inner-wall cleaning fluid, to avoid dilution of the cleaning fluid and thus achieve a better cleaning effect. In some embodiments, the cleaning control method may further include the following operation. The pipette needle is controlled to aspirate air to form a second air section, after the pipette needle aspirating the first cleaning fluid, to avoid throwing fluid during movement of the pipette needle. Then, the moving component is controlled to move the pipette needle to the cleaning cell, and the aspirated air in the second air section is discharged. The moving component is controlled to at least partially insert the pipette needle into the outer-wall cleaning fluid in the cleaning cell, to achieve efficient cleaning for the pipette needle. The specific process including aspirating air to form the first air section and the second air section successively may refer to the above descriptions in combination with FIG. 4, which are not elaborated here.

It should be noted that contents described in combination with the sample analyzer in various embodiments of the invention may be incorporated here, and are not elaborated here. When the cleaning control method is applied to various embodiments of the sample analyzer 1', the operations 601, 602 and 603 may be adjusted adaptively. Specifically, the cleaning fluid supply mechanism 6' is controlled to provide the first cleaning fluid to the inner cavity of the pipette needle 5 as the inner-wall cleaning fluid. Then, the moving component 4 is controlled to insert the pipette needle 5 into the second cleaning fluid or the third cleaning fluid in the first cleaning cell 8.

Furthermore, although exemplary embodiments have been described in the description, any and all embodiments having equivalent elements, modifications, omissions, combinations (e.g., crossed solutions of various embodiments), adaptations, or changes based on the invention shall fall within the scope of the invention. Elements in the claims will be interpreted broadly based on languages used in the claims, and are not limited to the examples described in the description or during implementation of the invention, and examples of the elements are interpreted as non-exclusive. Therefore, the description and examples are intended to be considered as examples only, and the true scope is indicated by a full scope of the following claims and their equivalents.

The above descriptions are intended to be illustrative, rather than limitation. For example, the above examples (or, one or more solutions thereof) may be used in combination with each other. For example, those of ordinary skill in the art may use other examples upon reading the above descriptions. Furthermore, in the above implementations, various features may be grouped together to simplify the invention. This should not be interpreted as an intention where a disclosed feature which is not required to be protected is essential for any claim. Instead, the disclosed subject matter may be less than all features of a particular disclosed embodiment. Therefore, the following claims are incorporated into the implementations as examples, or embodiments, here each claim is individually used as a separate embodiment, and these embodiments may be combined with each other in various combinations or arrangements. The scope of the invention should be determined with reference to a full scope of the attached claims and their equivalents.

The above embodiments are merely exemplary embodiments of the invention, and are not intended to limit the invention. The scope of protection of the invention is defined by the claims. Various modifications or equivalent replacements may be made to the invention by those skilled in the art based on essence and the scope of protection of the invention, and these modifications or equivalent replacements may also be deemed to fall within the scope of protection of the invention.

## Claims

1. A sample analyzer, **characterized in that** the sample analyzer comprises:
a dispensing mechanism, comprising a moving component and a pipette needle arranged on the moving component, wherein the moving component is configured to drive the pipette needle to move among different operation positions;
a first container, located at a first position in a movement trajectory of the pipette needle and containing a first cleaning fluid;
an ultrasonic cleaning mechanism, comprising a first cleaning cell containing a cleaning fluid and an ultrasonic source assembly configured to provide a sound field vibration to the cleaning fluid in the first cleaning cell;
a first fluid path support mechanism, configured to provide at least a second cleaning fluid to the first cleaning cell; and
a controller configured to:
control the moving component to move the pipette needle to the first position, to aspirate the first cleaning fluid from the first container;
control the first fluid path support mechanism to provide the second cleaning fluid to the first cleaning cell;
control the moving component to move and insert the pipette needle into the second cleaning fluid in the cleaning cell after the first cleaning fluid is aspirated; and
control the ultrasonic source assembly to provide the sound field vibration to the second cleaning fluid in the first cleaning cell and the first cleaning fluid.

2. The sample analyzer of claim 1, wherein the ultrasonic source assembly is provided at a bottom of the first cleaning cell, to transmit the sound field vibration to the cleaning fluid in the first cleaning cell through the bottom of the first cleaning cell.

3. The sample analyzer of claim 1, further comprising a fluid discharge mechanism configured to discharge a used cleaning fluid in the first cleaning cell, wherein
the controller is further configured to, after controlling the ultrasonic source assembly to provide the sound field vibration to the second cleaning fluid in the first cleaning cell for a first preset duration and/or a first preset number of times:
turn off the ultrasonic source assembly and control the fluid discharge mechanism to discharge the second cleaning fluid in the first cleaning cell; and
control the pipette needle to discharge the first cleaning fluid,
preferably, the first fluid path support mechanism is further configured to provide a third cleaning fluid to the first cleaning cell, and the sample analyzer further comprises a second container located at a second position in the movement trajectory of the pipette needle and containing a fourth cleaning fluid,
the controller is further configured to, after turning off the ultrasonic source assembly and controlling the fluid discharge mechanism to discharge the second cleaning fluid in the first cleaning cell, and controlling the pipette needle to discharge the first cleaning fluid:
control the moving component to move the pipette needle to the second position after the first cleaning fluid is discharged, to aspirate the fourth cleaning fluid from the second container;
control the first fluid path support mechanism to provide the third cleaning fluid to the first cleaning cell;
control the moving component to move and at least partially insert the pipette needle into the third cleaning fluid in the first cleaning cell after the fourth cleaning fluid is aspirated;
control the ultrasonic source assembly to provide the sound field vibration to the third cleaning fluid in the first cleaning cell;
turn off the ultrasonic source assembly and control the fluid discharge mechanism to discharge the third cleaning fluid in the first cleaning cell, after providing the sound field vibration to the third cleaning fluid for a second preset duration and/or a second preset number of times; and
control the pipette needle to discharge the fourth cleaning fluid.

4. The sample analyzer of claim 3, further comprising a second cleaning cell, a second fluid path support mechanism configured to provide cleaning water to the second cleaning cell, and a third fluid path support mechanism configured to provide cleaning water to an inner cavity of the pipette needle, wherein
the controller is further configured to, during controlling the pipette needle to discharge the first cleaning fluid, control the pipette needle to move to the second cleaning cell to discharge the first cleaning fluid;
after controlling the pipette needle to discharge the first cleaning fluid, the controller is further configured to:
control the second fluid path support mechanism to provide the cleaning water to the second cleaning cell, to clean an outer wall of the pipette needle with the cleaning water; and
control the third fluid path support mechanism to provide the cleaning water to the inner cavity of the pipette needle, to wash an inner wall of the pipette needle.

5. The sample analyzer of any of claims 1 to 4, wherein the controller is further configured to control the pipette needle to aspirate air to form a first air section with a volume of 1µl to 5µl, before the pipette needle aspirates the first cleaning fluid or the fourth cleaning fluid.

6. The sample analyzer of any of claims 1 to 4, wherein the controller is further configured to: control the pipette needle to aspirate air to form a second air section, after the pipette needle aspirates the first cleaning fluid or the fourth cleaning fluid; control the moving component to move the pipette needle to the first cleaning cell, and to discharge the aspirated air in the second air section; and control the moving component to at least partially insert the pipette needle into the second cleaning fluid or the third cleaning fluid in the first cleaning cell.

7. The sample analyzer of any of claims 1 to 4, wherein the first fluid path support mechanism comprises a first fluid path assembly configured to supply a cleaning agent and a second fluid path assembly configured to supply cleaning water, the second cleaning fluid is formed by mixing the cleaning agent with the cleaning water, preferably, the first fluid path assembly is provided with a first fluid outlet port, the second fluid path assembly is provided with a second fluid outlet port, the first cleaning cell is provided with a fluid inlet port communicated with the first fluid outlet port and the second fluid outlet port through adjustment components respectively, and the adjustment components are controlled by the controller to adjust fluid volumes outputted from the first fluid outlet port and the second fluid outlet port respectively.

8. The sample analyzer of claim 1, wherein the first cleaning fluid is different from the second cleaning fluid.

9. A sample analyzer, **characterized in that** the sample analyzer comprises:
a dispensing mechanism, comprising a moving component and a pipette needle arranged on the moving component, wherein the moving component is configured to drive the pipette needle to move among different operation positions;
an ultrasonic cleaning mechanism, comprising a first cleaning cell containing a cleaning fluid and an ultrasonic source assembly configured to provide a sound field vibration to the cleaning fluid in the first cleaning cell;
a first fluid path support mechanism configured to provide a first cleaning fluid to the first cleaning cell;
a second fluid path support mechanism configured to provide a second cleaning fluid into an inner cavity of the pipette needle; and
a controller configured to:
control the first fluid path support mechanism to provide the first cleaning fluid to the first cleaning cell;
control the second fluid path support mechanism to provide the second cleaning fluid into the inner cavity of the pipette needle;
control the moving component to at least partially insert the pipette needle into the first cleaning fluid in the first cleaning cell; and
control the ultrasonic source assembly to provide the sound field vibration to the first cleaning fluid in the first cleaning cell and the second cleaning fluid in the inner cavity of the pipette needle.

10. The sample analyzer of claim 9, wherein the controller is further configured to:
control the second fluid path support mechanism to provide the second cleaning fluid into the pipette needle, before the pipette needle moves to the first cleaning cell or when the pipette needle moves down to the first cleaning cell.

11. The sample analyzer of claim 9, wherein the first cleaning fluid is different in composition and/or source from the second cleaning fluid, and preferably, the first cleaning fluid is a chemically erosive fluid, and the second cleaning fluid is cleaning water.

12. The sample analyzer of claim 9, wherein the second fluid path support mechanism comprises a second cleaning fluid supply component, a pumping component and a control valve which are connected in sequence, the control valve has an end communicated with the pumping component and another end communicated with the inner cavity of the pipette needle, the controller is further configured to: turn on the pumping component and the control valve, during controlling the second fluid path support mechanism to provide the second cleaning fluid into the inner cavity of the pipette needle, and turn off the pumping component and the control valve, after providing the second cleaning fluid into the inner cavity of the pipette needle, preferably, the second cleaning fluid is cleaning water, the second cleaning fluid supply component comprises a water tank, the second fluid path support mechanism further comprises: a syringe having an end connected to the control valve and another end communicated with the inner cavity of the pipette needle, and a motor connected to the syringe and configured to drive the syringe, and the controller is further configured to control the motor to drive the syringe.

13. A sample analyzer, **characterized in that** the sample analyzer comprises:
a dispensing mechanism, comprising a moving component and a pipette needle arranged on the moving component, wherein the moving component is configured to drive the pipette needle to move among different operation positions;
a cleaning fluid supply mechanism, configured to provide a first cleaning fluid to an inner cavity of the pipette needle;
an ultrasonic cleaning mechanism, comprising a first cleaning cell containing a second cleaning fluid and an ultrasonic source assembly configured to provide a sound field vibration to the second cleaning fluid in the first cleaning cell;
a fluid path support mechanism, configured to provide the second cleaning fluid to the first cleaning cell; and
a controller configured to:
control the cleaning fluid supply mechanism to provide the first cleaning fluid to the inner cavity of the pipette needle;
control the fluid path support mechanism to provide the second cleaning fluid to the first cleaning cell;
control the moving component to insert the pipette needle into the second cleaning fluid in the first cleaning cell; and
control the ultrasonic source assembly to provide the sound field vibration to the second cleaning fluid in the first cleaning cell and the first cleaning fluid, the first cleaning fluid being different from the second cleaning fluid.

14. A cleaning control method for a sample analyzer, **characterized in that** the cleaning control method comprises:
providing an inner-wall cleaning fluid into an inner cavity of a pipette needle of the sample analyzer;
providing an outer-wall cleaning fluid to a cleaning cell of the sample analyzer, the inner-wall cleaning fluid being different in source from the outer-wall cleaning fluid, and/or the inner-wall cleaning fluid being different in composition from the outer-wall cleaning fluid;
at least partially inserting the pipette needle into the outer-wall cleaning fluid in the cleaning cell; and
providing a sound field vibration to the outer-wall cleaning fluid in the cleaning cell and the inner-wall cleaning fluid in the inner cavity of the pipette needle respectively.

15. The cleaning control method of claim 14, wherein providing an inner-wall cleaning fluid into an inner cavity of a pipette needle of the sample analyzer comprises:
controlling the pipette needle to aspirate the inner-wall cleaning fluid from a target position which does not overlap with a position where the cleaning cell is located, and preferably,
controlling the pipette needle to aspirate air to form a first air section with a volume of 1µl to 5µl, before the pipette needle aspirates the inner-wall cleaning fluid.
